# EUROPEAN PATENT SPECIFICATION

(11) **EP 3 107 963 B1**
(45) Date of publication and mention of the grant of the patent: **02.10.2019**
(21) Application number: 15710004.1
(22) Date of filing: 12.02.2015
(51) Int. Cl.: C08L 67/02, C08L 69/00

(54) **THERMOPLASTIC COMPOSITION AND ARTICLE**
THERMOPLASTISCHE ZUSAMMENSETZUNG UND ARTIKEL
COMPOSITION THERMOPLASTIQUE ET ARTICLE

(30) Priority: 20.02.2014 US 201414185073
(43) Date of publication of application: 28.12.2016
(73) Proprietor: SABIC Global Technologies B.V., 4612 PX Bergen op Zoom (NL)
(72) Inventor: WANG, Huihui, Shanghai 201319 (CN); GUAN, Bing, Shanghai 201319 (CN); LI, Huihui, Shanghai 201319 (CN)
(74) Representative: Sabic Intellectual Property Group
(86) International application number: PCT/IB2015/051065
(87) International publication number: WO 2015/125051

(56) References cited:
- US-B2- 6 583 256
- DATABASE WPI Week 199529 Thomson Scientific, London, GB; AN 1995-220864 XP002740508, & JP H07 133412 A (KURARAY CO LTD) 23 May 1995 (1995-05-23)

## Description

### BACKGROUND OF THE INVENTION

Black-colored plastics are commonly used for consumer electronics parts, including flat screen television bezels and mobile phone backs. Deep black polycarbonate compositions can be prepared, but with use they can exhibit environmental stress cracking due to inadequate chemical resistant. Blends of polycarbonate and poly(butylene terephthalate) exhibit improved chemical resistance, but the addition to these blends of common additives, including impact modifiers, fillers, and flame retardants, can cause yellowing and reduce the optical clarity of the blends. There remains a need for black-colored plastics capable of exhibiting an improved balance of deep black color, flame retardancy, and impact strength.

### BRIEF SUMMARY OF EMBODIMENTS OF THE INVENTION

One embodiment is a composition comprising, based on the total weight of the composition: 20 to 50 weight percent of a brominated polycarbonate; 10 to 50 weight percent of poly(butylene terephthalate); 10 to 40 weight percent of a block polyestercarbonate comprising a polyester block comprising resorcinol ester repeat units having the structure 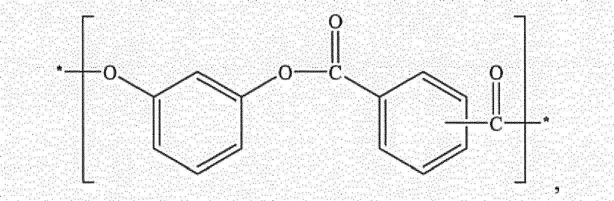 and a polycarbonate block comprising carbonate repeat units having the structure 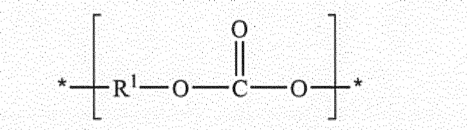 wherein at least 60 percent of the total number of R¹ groups are aromatic; 2 to 10 weight percent of diantimony trioxide; and 0.2 to 5 weight percent of a black colorant.

Another embodiment is an article comprising a composition comprising, based on the total weight of the composition: 20 to 50 weight percent of a brominated polycarbonate; 10 to 50 weight percent of poly(butylene terephthalate); 10 to 40 weight percent of a block polyestercarbonate comprising a polyester block comprising resorcinol ester repeat units having the structure 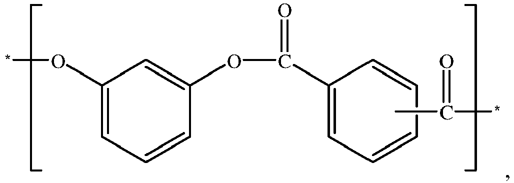 and a polycarbonate block comprising carbonate repeat units having the structure 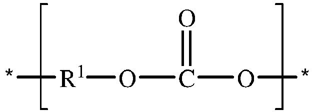 wherein at least 60 percent of the total number of R¹ groups are aromatic; 2 to 10 weight percent of diantimony trioxide; and 0.2 to 5 weight percent of a black colorant.

These and other embodiments are described in detail below.

### BRIEF DESCRIPTION OF THE DRAWINGS

Figure 1 is a photographic image of eight color chips, chips 1-8 corresponding, respectively, to Comparative Examples 1 and 2, Examples 1 and 2, Comparative Examples 3 and 4, and Examples 3 and 4.
Figure 2 consists of eight scanning electron micrographs of surface portions of molded samples, with images (a) to (h) corresponding, respectively, to Comparative Examples 1 and 2, Examples 1 and 2, Comparative Examples 3 and 4, and Examples 3 and 4.
Figure 3 consists of three scanning electron micrographs of surface portions of molded samples, with images (a) to (c) corresponding, respectively, to Comparative Example 5, Example 10, and Example 7.

### DETAILED DESCRIPTION OF THE INVENTION

The present inventors have determined that certain black-colored blends of brominated polycarbonate, poly(butylene terephthalate), a particular polyestercarbonate, and diantimony trioxide provide an improved balance of deep black color, flame retardancy, and impact strength relative to corresponding blends without the polyestercarbonate.

Thus, one embodiment is a composition comprising, based on the total weight of the composition: 20 to 50 weight percent of a brominated polycarbonate; 10 to 50 weight percent of poly(butylene terephthalate); 10 to 40 weight percent of a block polyestercarbonate comprising a polyester block comprising resorcinol ester repeat units having the structure 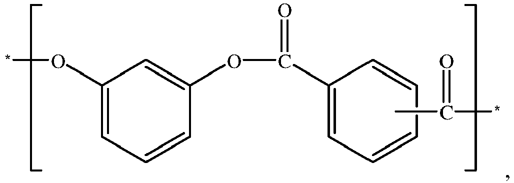 and a polycarbonate block comprising carbonate repeat units having the structure 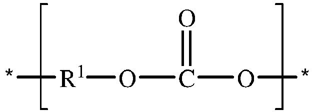 wherein at least 60 percent of the total number of R¹ groups are aromatic; 2 to 10 weight percent of diantimony trioxide; and 0.2 to 5 weight percent of a black colorant.

The composition comprises a brominated polycarbonate. The brominated polycarbonate can have a weight average molecular weight (Mw) of 8,000 to more than 200,000 atomic mass units, specifically of 20,000 to 80,000 atomic mass units, and an intrinsic viscosity of 0.30 to 1.0 deciliter/gram as measured in methylene chloride at 25°C. The brominated polycarbonate can be branched or unbranched.

In some embodiments, the brominated polycarbonate is the polymerization product of a brominated dihydric phenol and a carbonate precursor. Alternatively, the brominated polycarbonate can be the polymerization product of a carbonate precursor and a mixture of brominated and non-brominated aromatic dihydric phenols. Flame retardant brominated polycarbonates are disclosed, for example, in U.S. Patent Numbers 3,929,908 to Orlando et al., 4,170,711 to Lavallee et al., and 4,923,933 to Curry.

Exemplary brominated dihydric phenols include 2,2-bis(3,5-dibromo-4-hydroxyphenyl)propane and 2,2',6,6'-tetramethyl-3,3',5,5'-tetrabromo-4,4'-biphenol. Exemplary non-brominated dihydric phenols for mixing with brominated dihydric phenols to produce brominated polycarbonates can include, for example, 2,2-bis(4-hydroxyphenyl)propane, bis(4-hydroxyphenyl)methane, 2,2-bis(4-hydroxy-3-methylphenyl)propane, 4,4-bis(4-hydroxyphenyl)heptane, and (3,3'-dichloro-4,4'-dihydroxydiphenyl)methane. Mixtures of two or more different brominated and non-brominated dihydric phenols can be used. Branched brominated polycarbonates can also be used, as can blends of a linear brominated polycarbonate and a branched brominated polycarbonate.

The carbonate precursor can be a carbonyl halide, such as phosgene, or a carbonate ester, such as dimethyl carbonate or diphenyl carbonate.

In some embodiments, the brominated polycarbonate comprises 15 to 50 weight percent bromine, based on the weight of the brominated polycarbonate. Within this range, the weight percent bromine can be 20 to 40 weight percent, specifically 25 to 35 weight percent.

Synthesis of the brominated polycarbonate can utilize a monohydric phenol, which limits molecular weight and endcaps the polycarbonate. Suitable monohydric phenols include phenol, 4-(1,1,3,3-tetramethylbutyl)phenol, para-tertiary-butylphenol, 4-cumylphenol, and mixtures thereof.

In some embodiments, the brominated polycarbonate comprises repeat units having the structures 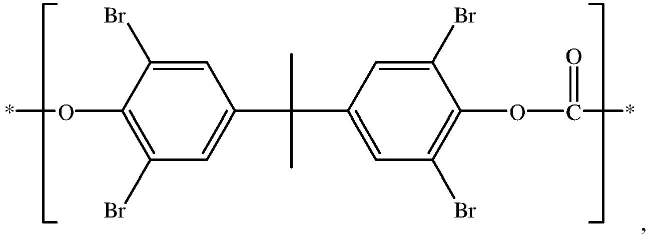 and

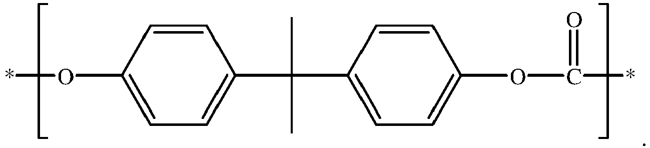

The composition comprises the brominated polycarbonate in an amount of 20 to 50 weight percent, based on the total weight of the composition. Within this range, the brominated polycarbonate amount can be 25 to 45 weight percent, specifically 28 to 38 weight percent. In some embodiments, the composition comprises 7 to 17 weight percent total bromine.

In addition to the brominated polycarbonate, the composition comprises poly(butylene terephthalate), CAS Registry No. 26062-94-2. In some embodiments, the poly(butylene terephthalate) has an intrinsic viscosity of 0.5 to 2 deciliter/gram, measured at 25 °C in chloroform. Within this range, the intrinsic viscosity can be 0.7 to 1.5 deciliter/gram, specifically 0.8 to 1.4 deciliter per gram.

The composition comprises the poly(butylene terephthalate) in an amount of 10 to 50 weight percent, based on the total weight of the composition. Within this range, the poly(butylene terephthalate) amount can be 15 to 45 weight percent, specifically 15 to 35 weight percent, more specifically 15 to 25 weight percent.

In addition to the brominated polycarbonate and the poly(butylene terephthalate), the composition comprises a block polyestercarbonate. The block polyestercarbonate comprises a polyester block comprising resorcinol ester repeat units having the structure 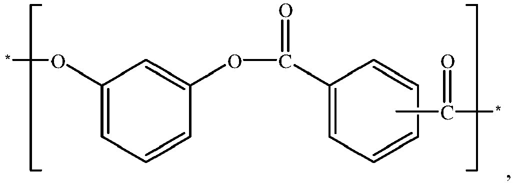 and a polycarbonate block comprising carbonate repeat units having the structure 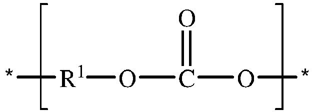 wherein at least 60 percent of the total number of R¹ groups are aromatic. It will be understood that the block polyestercarbonate can include more than one polyester block and/or more than one polycarbonate block. In other words, the block polyestercarbonate can be a diblock, triblock, or multiblock copolymer.

In some embodiments, R¹ can be derived from a dihydroxy compound such as an aromatic dihydroxy compound having the structure 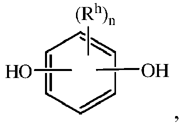 wherein n is 0, 1, 2, 3, or 4, and each R^{h} is independently a halogen atom (for example bromine), a C₁₋₁₀ alkyl, a halogen-substituted C₁₋₁₀ alkyl, a C₆₋₁₀ aryl, or a halogen-substituted C₆₋₁₀ aryl; or a bisphenol having the structure 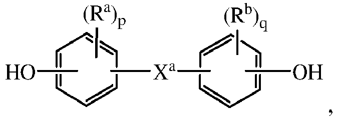 wherein p and q are each independently 0, 1, 2, 3, or 4, such that when p or q is less than 4, the valence of each carbon of the ring is filled by hydrogen, and R^{a} and R^{b} are each independently a halogen, C₁₋₁₂ alkoxy, or C₁₋₁₂ alkyl, and X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. The bridging group X^{a} can be, for example, a single bond, -O-, -S-, -S(O)-, -S(O)₂-, -C(O)-, or a divalent C₁₋₁₈ organic group, which can be cyclic or acyclic, aromatic or non-aromatic, and can further comprise heteroatoms such as halogens, oxygen, nitrogen, sulfur, silicon, or phosphorus. For example, X^{a} can be a substituted or unsubstituted C₃₋₁₈ cycloalkylidene; a C₁₋₂₅ alkylidene of the formula -C(R^{c})(R^{d})- wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl; or a group of the formula -C(=R^{e})- wherein R^{e} is a divalent C₁₋₁₂ hydrocarbon group.

Examples of specific dihydroxy compounds and bisphenol compounds such include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol compounds such as resorcinol, 5-methylresorcinol, 5-ethylresorcinol, 5-propylresorcinol, 5-butylresorcinol, 5-t-butylresorcinol, 5-phenylresorcinol, 5-cumylresorcinol, 2,4,5,6-tetrafluoro resorcinol, and 2,4,5,6-tetrabromo resorcinol; catechol; hydroquinone, 2-methylhydroquinone, 2-ethylhydroquinone, 2-propylhydroquinone, 2-butylhydroquinone, 2-t-butylhydroquinone, 2-phenylhydroquinone, 2-cumylhydroquinone, 2,3,5,6-tetramethylhydroquinone, 2,3,5,6-tetra-t-butylhydroquinone, 2,3,5,6-tetrafluorohydroquinone, 2,3,5,6-tetrabromohydroquinone; and combinations thereof.

Specific dihydroxy compounds include resorcinol, 2,2-bis(4-hydroxyphenyl) propane ("bisphenol A"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP" or 3,3-bis(4-hydroxyphenyl)-2-phenylisoindolin-1-one), 1,1-bis(4-hydroxy-3-methylphenyl)cyclohexane (DMBPC), 1,1-bis(4-hydroxy-3-methylphenyl)-3,3,5-trimethylcyclohexane, and mixtures thereof.

In some embodiments of the block polyestercarbonate, the polycarbonate block comprises carbonate repeat units having the structure

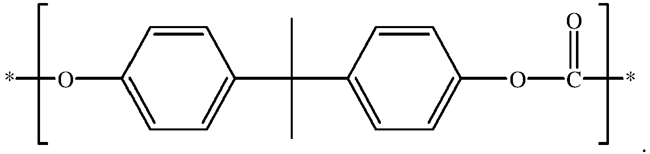

In some embodiments of the block polyestercarbonate, the polyester block comprises resorcinol ester repeat units having the structures 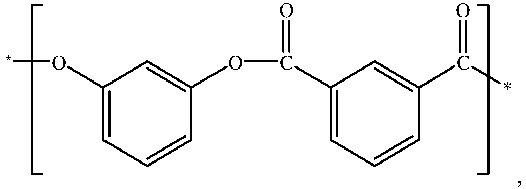 and 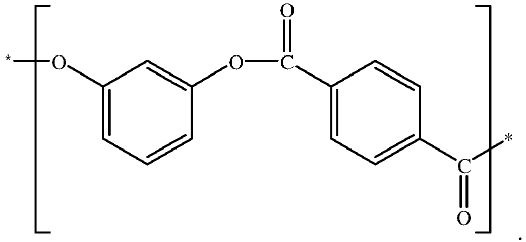 These resorcinol isophthalate and resorcinol terephthalate units, respectively, can be present in a mole ratio of 10:90 to 90:10, specifically 30:70 to 70:30, more specifically 45:55 to 55:45.

In some embodiments, the block polyestercarbonate further comprises resorcinol carbonate repeat units having the structure 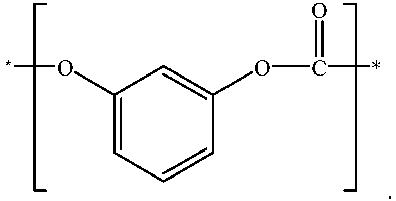 Such a repeat unit constitutes a linkage between a polyester block and a polycarbonate block.

Methods of forming block polyestercarbonates are known and include, for example, U.S. Patent Nos. 6,306,507 to Brunelle et al., 6,559,270 to Siclovan et al., 6,812320 to Silva et al., 7,078,447 to Glasgow et al., 7,109,274 to Acar et al., and 7,686,997 to Agarwal et al. In a representative procedure, hydroxyl-terminated polyester blocks are formed by reaction of excess resorcinol with a mixture of isophthaloyl chloride and terephthaloyl chloride in methylene chloride in the presence of base. Without isolating the hydroxyl-terminated polyester blocks, bisphenol A and a small amount of phenol are added to the reaction mixture with water (to dissolve salts) and additional methylene chloride. Phosgene and sodium hydroxide are then gradually added to the reaction mixture, producing the phenol-capped block polyestercarbonate, which is isolated by precipitation in a mixture of hot water and methylene chloride.

The block polyestercarbonate can comprise 5 to 95 weight percent of the polyester block, and 95 to 5 weight percent of the polycarbonate block. Within this range, the weight ratio of polyester block to polycarbonate block can be 10:90 to 90:10, specifically 20:80 to 80:20. Particularly useful block polyestercarbonates comprise 10 to 40 weight percent of the polyester block and 60 to 90 weight percent of the polycarbonate block, specifically 10 to 30 weight percent of the polyester block and 90 to 70 weight percent of the polycarbonate block.

The composition comprises the block polyestercarbonate in an amount of 10 to 40 weight percent, based on the total weight of the composition. Within this range, the block polyestercarbonate amount can be 15 to 40 weight percent, specifically 25 to 35 weight percent.

The composition further comprises diantimony trioxide (Sb₂O₃; CAS Registry No. 1309-64-4). In some embodiments, the diantimony trioxide is provided in the form of a mixture containing 70 to 90 weight percent diantimony trioxide and 10 to 30 weight percent poly(ethylene-co-vinyl acetate), based on the weight of the mixture.

The composition comprises diantimony trioxide in an amount of 2 to 10 weight percent, based on the total weight of the composition. Within this range, the diantimony trioxide amount can be 4 to 8 weight percent.

The composition comprises a black colorant. Suitable black colorants include dyes, pigments, and mixtures thereof. In some embodiments, the black colorant comprises carbon black.Suitable carbon blacks are commercially available and include, for example, MONARCH™ 800, MONARCH™ 900, MONARCH™ 1000, and MONARCH™ 1400 from Cabot; SATIN BLACK™ SBX452, SATIN BLACK™ SBX552, and SATIN BLACK™ SBX652 from Continental Carbon; RAVEN™ 2500 from Columbian Chemicals; and PRINTEX™ 85 from Degussa. In some embodiments, the black colorant comprises at least two organic dyes. Suitable dye classes from which the at least two organic dyes can be selected include anthraquinones, anthrapyridones, perylenes, anthracenes, perinones, indanthrones, quinacridones, xanthenes, thioxanthenes, oxazines, oxazolines, indigoids, thioindigoids, quinophthalones, naphthalimides, cyanines, methines, pyrazolones, lactones, coumarins, bis-benzoxazolylthiophenes, naphthalenetetracarboxylic acids, phthalocyanines, triarylmethanes, aminoketones, bis(styryl)biphenyls, azines, rhodamines, derivatives of the foregoing, and combinations thereof. Specific organic dyes suitable for use among the at least two organic dyes include Disperse Yellow 201, Solvent Green 3, Solvent Red 52, Solvent Red 135, Solvent Violet 13, Disperse Orange 47, Solvent Orange 60, and Solvent Blue 104. When the colorant includes organic dyes and particularly when the colorant consists of organic dyes, at least two dyes of different colors can be employed to produce a black color. For example, black color can be provided by a combination of a red and green dye, or a combination of a blue dye and an orange dye, or a combination of a purple dye and a yellow dye. In some embodiments, the black colorant comprises carbon black, at least two dyes, or a combination thereof.

The composition comprises the black colorant in an amount of 0.2 to 5 weight percent, based on the total weight of the composition. Within this range, the black colorant amount can be 0.4 to 2 weight percent, specifically 0.4 to 1.5 weight percent.

In some embodiments, the composition further comprises an impact modifier. Suitable impact modifiers include poly(butyl acrylate-co-methyl methacrylate), poly(acrylonitrile-co-butadiene-co-styrene) (including high rubber graft poly(acrylonitrile-co-butadiene-co-styrene)), poly(methyl methacrylate-co-butadiene-co-styrene), poly(acrylonitrile-co-styrene-co-acrylate), polyolefin elastomer, polycarbonate-polysiloxane block copolymer, and combinations thereof. In some embodiments, the impact modifier comprises poly(butyl acrylate-co-methyl methacrylate). When present, the impact modifier can be used in an amount of 4 to 14 weight percent, based on the total weight of the composition. Within this range, the impact modifier amount can be 5 to 11 weight percent, specifically 6 to 9 weight percent.

In some embodiments, the composition further comprises an unbrominated polycarbonate. Unbrominated polycarbonates can comprise repeat units having the structure 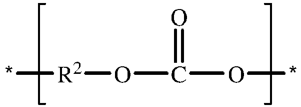 wherein at least 60 percent of the total number of R² groups are aromatic, and all of the R² groups are bromine-free.

The group R² can be derived from a dihydroxy compound or a bisphenol compound. Examples of such compounds include 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha,alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'-tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole; resorcinol compounds such as resorcinol, 5-methylresorcinol, 5-ethylresorcinol, 5-propylresorcinol, 5-butylresorcinol, 5-t-butylresorcinol, 5-phenylresorcinol, 5-cumylresorcinol, and 2,4,5,6-tetrafluororesorcinol; catechol; hydroquinone, 2-methylhydroquinone, 2-ethylhydroquinone, 2-propylhydroquinone, 2-butylhydroquinone, 2-t-butylhydroquinone, 2-phenylhydroquinone, 2-cumylhydroquinone, 2,3,5,6-tetramethylhydroquinone, 2,3,5,6-tetra-t-butylhydroquinone, 2,3,5,6-tetrafluorohydroquinone; and combinations thereof.

Specific dihydroxy compounds useful for forming the unbrominated polycarbonate include resorcinol, 2,2-bis(4-hydroxyphenyl) propane ("bisphenol A"), 3,3-bis(4-hydroxyphenyl) phthalimidine, 2-phenyl-3,3'-bis(4-hydroxyphenyl) phthalimidine (also known as N-phenyl phenolphthalein bisphenol, "PPPBP" or 3,3-bis(4-hydroxyphenyl)-2-phenylisoindolin-1-one), 1,1-bis(4-hydroxy-3-methylphenyl)cyclohexane (DMBPC), 1,1-bis(4-hydroxy-3-methylphenyl)-3,3,5-trimethylcyclohexane, and mixtures thereof.

In some embodiments of the block polyestercarbonate, the polycarbonate block comprises carbonate repeat units having the structure

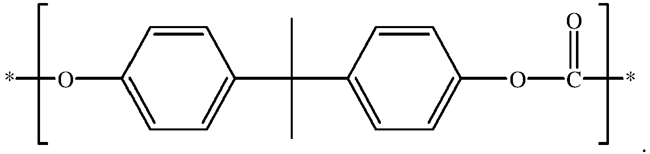

When present, the unbrominated polycarbonate can be used in an amount of 5 to 20 weight percent, based on the total weight of the composition. Within this range, the unbrominated polycarbonate amount can be 7 to 16 weight percent.

The composition can, optionally, further comprise one or more additives, including flow modifiers, fillers (including fibrous and scale-like fillers), antioxidants, heat stabilizers, light stabilizers, ultraviolet (UV) light stabilizers, UV absorbing additives, plasticizers, lubricants, mold release agents, antistatic agents, anti-fog agents, antimicrobial agents, surface effect additives, radiation stabilizers, flame retardants, anti-drip agents (e.g., a PTFE-encapsulated styrene-acrylonitrile copolymer (TSAN)), and combinations thereof. In general, the additives, when present, are used in a total amount of less than or equal to 5 weight percent, based on the total weight of the composition. Within this limit, the additives can be used in a total amount of less than or equal to 2 weight percent, specifically less than or equal to 1.5 weight percent.

In a very specific embodiment of the composition, the polyester block comprises resorcinol ester repeat units having the structures 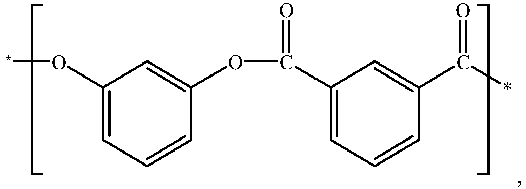 and 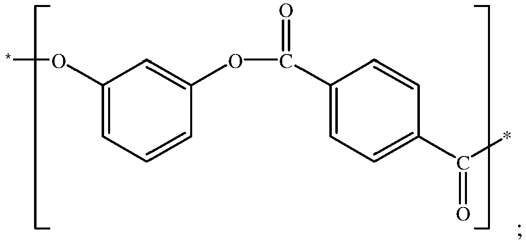 the polycarbonate block comprises carbonate repeat units having the structure 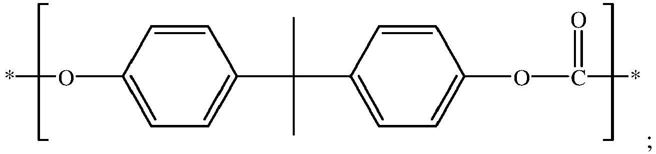 the block polyestercarbonate comprises 10 to 40 weight percent of the polyester block and 60 to 90 weight percent of the polycarbonate block; the brominated polycarbonate comprises repeat units having the structures 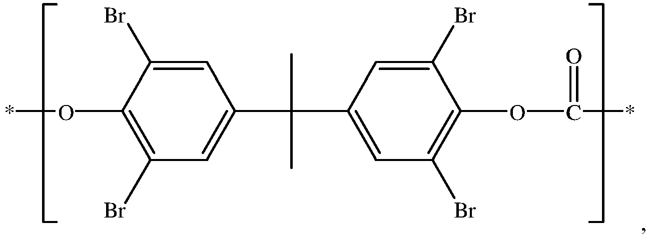 and 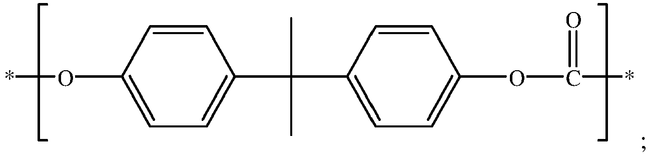 the black colorant comprises carbon black; the composition comprises 28 to 38 weight percent of the brominated polycarbonate, 10 to 25 weight percent of the poly(butylene terephthalate), 25 to 35 weight percent of the block polyestercarbonate, 4 to 8 weight percent of the diantimony trioxide, and 0.4 to 2 weight percent of the black colorant; and the composition further comprises 5 to 11 weight percent of a poly(butyl acrylate-co-methyl methacrylate).

Another embodiment is an article comprising a composition comprising, based on the total weight of the composition: 20 to 50 weight percent of a brominated polycarbonate; 10 to 50 weight percent of poly(butylene terephthalate); 10 to 40 weight percent of a block polyestercarbonate comprising a polyester block comprising resorcinol ester repeat units having the structure 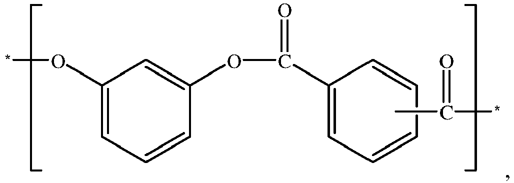 and a polycarbonate block comprising carbonate repeat units having the structure 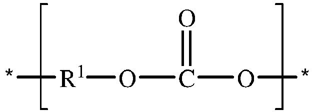 wherein at least 60 percent of the total number of R¹ groups are aromatic; 2 to 10 weight percent of diantimony trioxide; and 0.2 to 5 weight percent of a black colorant. All of the above-described variations of the composition apply as well to the composition used to form the article.

The composition is particularly suitable for molding flat screen television bezels, cell phone backs, and exterior parts of household appliances such as toasters and microwave ovens.

In a very specific embodiment of the article, the polyester block comprises resorcinol ester repeat units having the structures 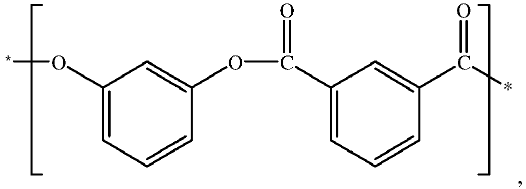 and 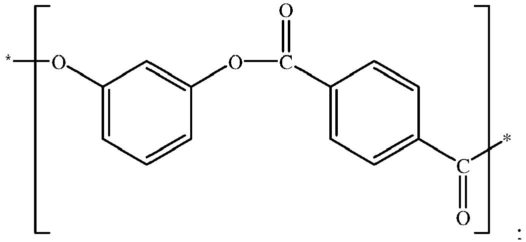 the polycarbonate block comprises carbonate repeat units having the structure 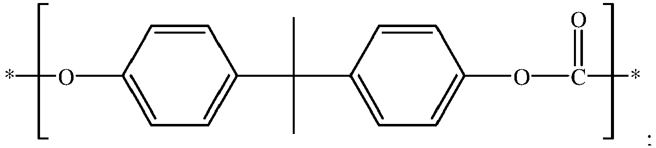 the block polyestercarbonate comprises 10 to 40 weight percent of the polyester block and 60 to 90 weight percent of the polycarbonate block; the brominated polycarbonate comprises repeat units having the structures 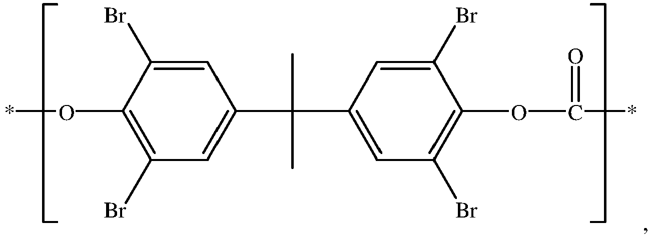 and 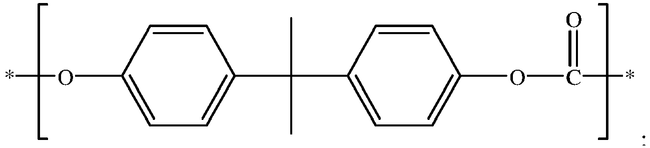 the black colorant comprises carbon black; the composition comprises 28 to 38 weight percent of the brominated polycarbonate, 10 to 25 weight percent of the poly(butylene terephthalate), 25 to 35 weight percent of the block polyestercarbonate, 4 to 8 weight percent of the diantimony trioxide, and 0.4 to 2 weight percent of the black colorant; and the composition further comprises 5 to 11 weight percent of a poly(butyl acrylate-co-methyl methacrylate).

The invention includes at least the following embodiments.
Embodiment 1: A composition comprising, based on the total weight of the composition: 20 to 50 weight percent of a brominated polycarbonate; 10 to 50 weight percent of poly(butylene terephthalate); 10 to 40 weight percent of a block polyestercarbonate comprising a polyester block comprising resorcinol ester repeat units having the structure 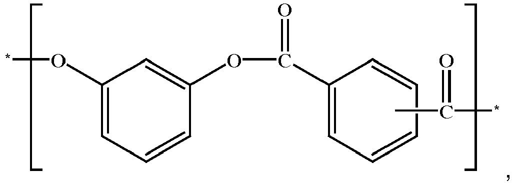 and a polycarbonate block comprising carbonate repeat units having the structure 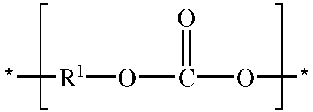 wherein at least 60 percent of the total number of R¹ groups are aromatic wherein the block polyestercarbonate comprises 10 to 40 weight percent of the polyester block and 60 to 90 weight percent of the polycarbonate block; 2 to 10 weight percent of diantimony trioxide; and 0.2 to 5 weight percent of a black colorant.
Embodiment 2: The composition of embodiment 1, wherein the black colorant comprises carbon black, at least two dyes, or a combination thereof.
Embodiment 3: The composition of embodiment 1, wherein the black colorant comprises at least two organic dyes.
Embodiment 4: The composition of embodiment 1, further comprising 4 to 14 weight percent of an impact modifier selected from the group consisting of poly(butyl acrylate-co-methyl methacrylate), poly(acrylonitrile-co-butadiene-co-styrene), poly(methyl methacrylate-co-butadiene-co-styrene), poly(acrylonitrile-co-styrene-co-acrylate), polyolefin elastomer, polycarbonate-polysiloxane block copolymer, and combinations thereof.
Embodiment 5: The composition of embodiment 1, further comprising 4 to 14 weight percent of an impact modifier comprising poly(butyl acrylate-co-methyl methacrylate).
Embodiment 6: The composition of embodiment 1, further comprising 5 to 20 weight percent of an unbrominated polycarbonate.
Embodiment 7: The composition of embodiment 1,
   wherein the polyester block comprises resorcinol ester repeat units having the structures 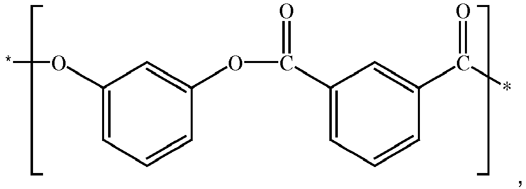 and 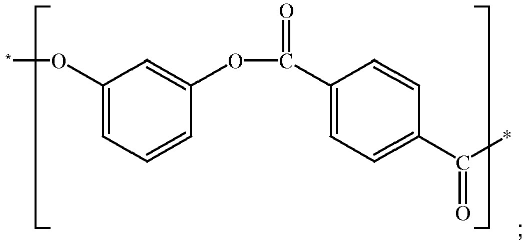 wherein the polycarbonate block comprises carbonate repeat units having the structure 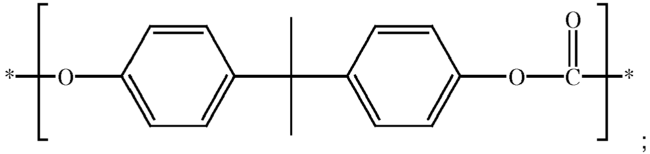 wherein the block polyestercarbonate comprises 10 to 40 weight percent of the polyester block and 60 to 90 weight percent of the polycarbonate block; wherein the brominated polycarbonate comprises repeat units having the structures 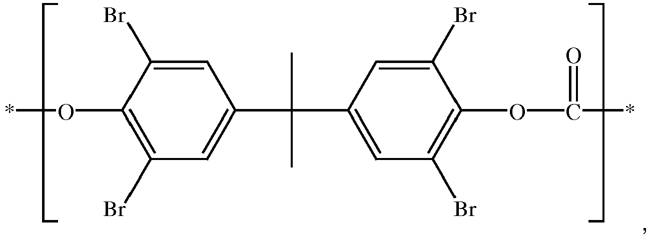 and 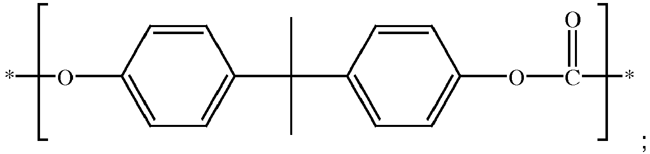
   wherein the black colorant comprises carbon black;
   wherein the composition comprises
      28 to 38 weight percent of the brominated polycarbonate,
      10 to 25 weight percent of the poly(butylene terephthalate),
      25 to 35 weight percent of the block polyestercarbonate,
      4 to 8 weight percent of the diantimony trioxide, and
      0.4 to 2 weight percent of the black colorant; and
      wherein the composition further comprises 5 to 11 weight percent of a poly(butyl acrylate-co-methyl methacrylate).
Embodiment 8: An article comprising a composition comprising, based on the total weight of the composition:
   28 to 38 weight percent of a brominated polycarbonate;
   10 to 25 weight percent of poly(butylene terephthalate);
   25 to 35 weight percent of a block polyestercarbonate comprising
   a polyester block comprising resorcinol ester repeat units having the structure 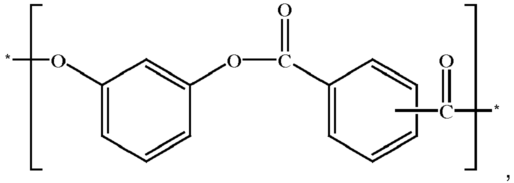 and
   a polycarbonate block comprising carbonate repeat units having the structure 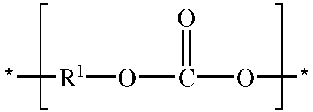 wherein at least 60 percent of the total number of R¹ groups are aromatic; wherein the polyester block comprises resorcinol ester repeat units having the structures 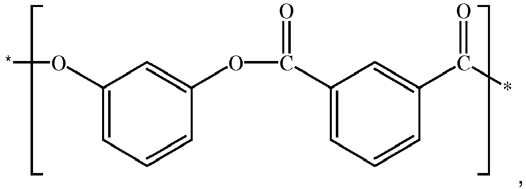 and 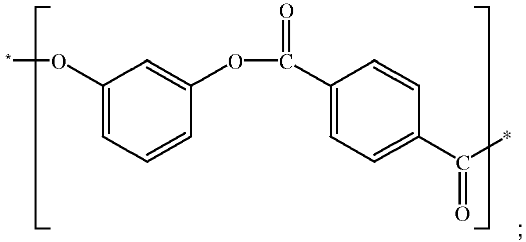
   wherein the polycarbonate block comprises carbonate repeat units having the structure 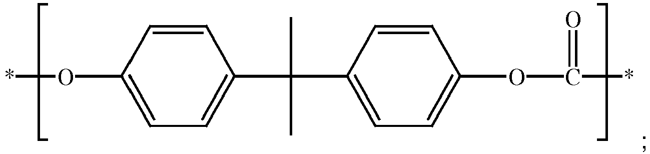
   wherein the block polyestercarbonate comprises 10 to 40 weight percent of the polyester block and 60 to 90 weight percent of the polycarbonate block;
   wherein the brominated polycarbonate comprises repeat units having the structures 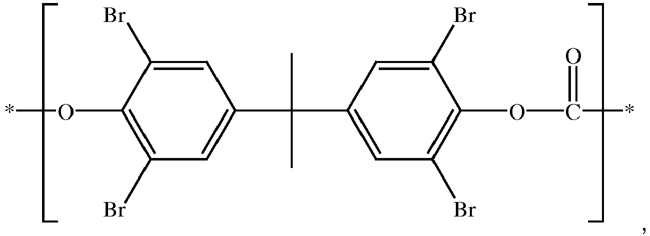 and 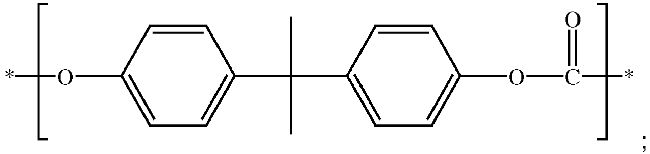
   4 to 8 weight percent of diantimony trioxide; and
   0.4 to 2 weight percent of a black colorant; and
   wherein the composition further comprises 5 to 11 weight percent of a poly(butyl acrylate-co-methyl methacrylate).
Embodiment 9: The article of embodiment 8, wherein the article is a flat screen television bezel, a cell phone back, or an exterior part of a household appliance.
Embodiment 10: The composition of any of embodiments 1-9, further comprising 4 to 14 weight percent of an impact modifier selected from the group consisting of poly(butyl acrylate-co-methyl methacrylate), poly(acrylonitrile-co-butadiene-co-styrene), poly(methyl methacrylate-co-butadiene-co-styrene), poly(acrylonitrile-co-styrene-co-acrylate), polyolefin elastomer, polycarbonate-polysiloxane block copolymer, and combinations thereof.
Embodiment 11: The composition of any of embodiments 1-9, further comprising 4 to 14 weight percent of an impact modifier comprising poly(butyl acrylate-co-methyl methacrylate).
Embodiment 12: The composition of any of embodiments 1-11, further comprising 5 to 20 weight percent of an unbrominated polycarbonate.
Embodiment 13: The composition of embodiment 1, wherein the polyester block comprises resorcinol ester repeat units having the structures 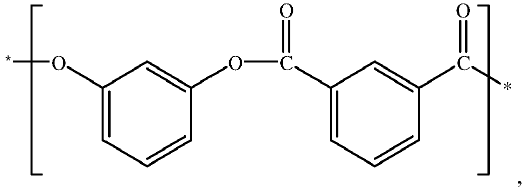 and 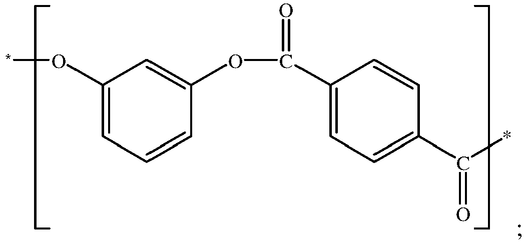 wherein the polycarbonate block comprises carbonate repeat units having the structure 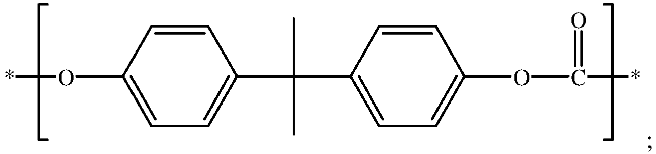 wherein the block polyestercarbonate comprises 10 to 40 weight percent of the polyester block and 60 to 90 weight percent of the polycarbonate block; wherein the brominated polycarbonate comprises repeat units having the structures 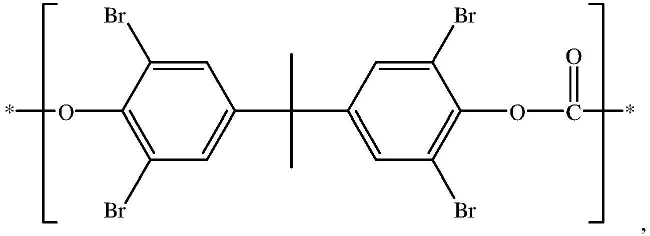 and 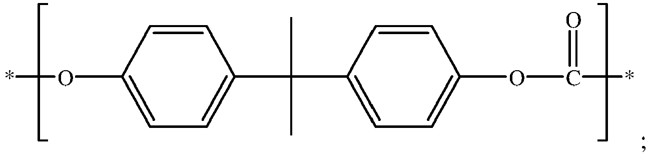 wherein the black colorant comprises carbon black; wherein the composition comprises 28 to 38 weight percent of the brominated polycarbonate, 10 to 25 weight percent of the poly(butylene terephthalate), 25 to 35 weight percent of the block polyestercarbonate, 4 to 8 weight percent of the diantimony trioxide, and 0.4 to 2 weight percent of the black colorant; and wherein the composition further comprises 5 to 11 weight percent of a poly(butyl acrylate-co-methyl methacrylate).
Embodiment 14: An article comprising a composition comprising, based on the total weight of the composition: 20 to 50 weight percent of a brominated polycarbonate; 10 to 50 weight percent of poly(butylene terephthalate); 10 to 40 weight percent of a block polyestercarbonate comprising a polyester block comprising resorcinol ester repeat units having the structure 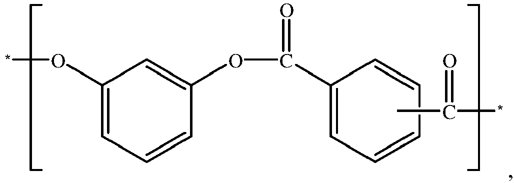 and
   a polycarbonate block comprising carbonate repeat units having the structure 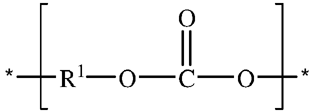 wherein at least 60 percent of the total number of R¹ groups are aromatic; 2 to 10 weight percent of diantimony trioxide; and 0.2 to 5 weight percent of a black colorant.
Embodiment 15: The article of embodiment 14, wherein the article is a flat screen television bezel, a cell phone back, or an exterior part of a household appliance.
Embodiment 16: The article of embodiment 14 or 15, wherein the polyester block comprises resorcinol ester repeat units having the structures 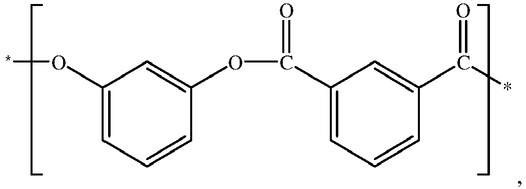 and 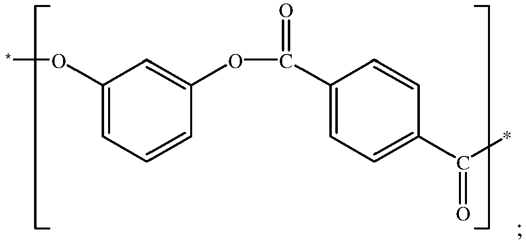 wherein the polycarbonate block comprises carbonate repeat units having the structure 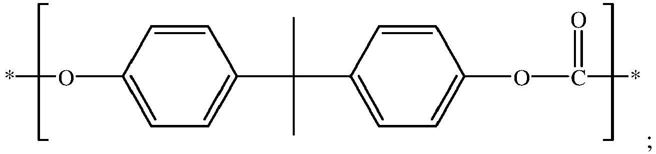 wherein the block polyestercarbonate comprises 10 to 40 weight percent of the polyester block and 60 to 90 weight percent of the polycarbonate block; wherein the brominated polycarbonate comprises repeat units having the structures 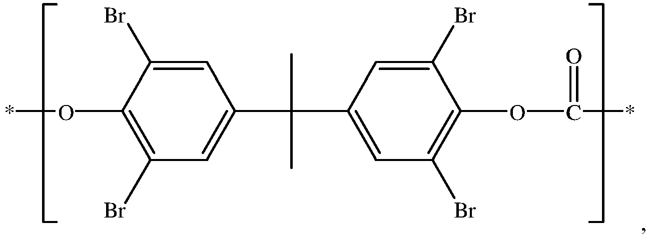 and 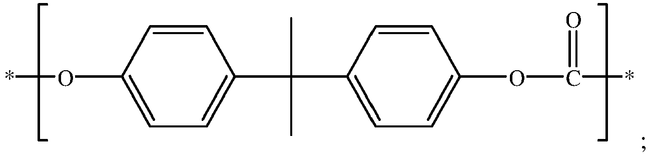 wherein the composition comprises 28 to 38 weight percent of the brominated polycarbonate, 10 to 25 weight percent of the poly(butylene terephthalate), 25 to 35 weight percent of the block polyestercarbonate, 4 to 8 weight percent of the diantimony trioxide, and 0.4 to 2 weight percent of the black colorant; and wherein the composition further comprises 5 to 11 weight percent of a poly(butyl acrylate-co-methyl methacrylate).

All ranges disclosed herein are inclusive of the endpoints, and the endpoints are independently combinable with each other. Each range disclosed herein constitutes a disclosure of any point or sub-range lying within the disclosed range.

The invention is further illustrated by the following non-limiting examples.

### EXAMPLES 1-15, COMPARATIVE EXAMPLES 1-6

Components used to prepare thermoplastic compositions are summarized in Table 1.

**Table 1**

| Component | Description |
|---|---|
| PC1 | Bisphenol A polycarbonate, CAS Reg. No. 111211-39-3, having a weight average molecular weight of 29,900 atomic mass units; obtained from Sabic Innovative Plastic. |
| PC2 | Bisphenol A polycarbonate, CAS Reg. No. 111211-39-3, having a weight average molecular weight of 21,900 atomic mass units; obtained from Sabic Innovative Plastic. |
| PEC1 | A block polyestercarbonate, CAS Reg. No. 235420-85-6, comprising about 81 mole percent resorcinol iso-/terephthalate ester linkages, about 8 mole % resorcinol carbonate linkages, and about 11 mole % bisphenol A carbonate linkages, having a glass transition temperature of about 142° C; obtained from Sabic Innovative Plastics. |
| PEC2 | A block polyestercarbonate, CAS Reg. No. 235420-85-6, comprising about 19 mole percent resorcinol iso-/terephthalate ester linkages, about 6 mole % resorcinol carbonate linkages, and about 75 mole % bisphenol A carbonate linkages, having a glass transition temperature of about 136° C; obtained from Sabic Innovative Plastics. |
| PBT | Poly (1,4-butylene terephthalate), CAS Reg. No. 26062-94-2, having an intrinsic viscosity of 1.1 deciliters/gram; obtained from Changchun Plastics. |
| p(BA/MMA) | Poly(butyl acrylate-co-methyl methacrylate), CAS Reg. No. 25852-37-3, containing 1-3 weight percent calcium carbonate, CAS Reg. No. 471-34-1; obtained as PARALOID™ KM-330 Impact Modifier from The Dow Chemical Company. |
| PC-Br | A brominated polycarbonate that is a copolymer of phosgene, 4,4-(1-methylethylidene-bis(2,6-dibromophenol), and 4,4-(1-methylethylidiene)bisphenol, endcapped with the ester of p-cumylphenol, polymer CAS Reg. No. 156042-31-8, having a bromine content of about 26 weight percent, a weight average molecular weight of about 24,000 atomic mass units, and a glass transition temperature of about 185 °C; obtained from Sabic Innovative Plastics. |
| Sb₂O₃/EVA | A blend of 85 weight percent antimony trioxide, CAS Reg. No. 1309-64-4 and 15 poly(ethylene-co-vinyl acetate), CAS Reg. No. 24937-78-8; obtained from GuangXi Brightsun. |
| TSAN | Polytetrafluoroethylene, CAS 9002-84-0, 50 weight percent, encapsulated in poly(styrene-co-acrylonitrile), CAS 9003-54-7, 50 weight percent; obtained as CYCOLAC™ Resin INP449 from SABIC Innovative Plastics. |
| p(E/EA) | Poly(ethylene-co-ethyl acrylate), CAS Reg. No. 9010-86-0, having an ethyl acrylate content of about 12-21 weight percent weight percent; obtained from the Dow Chemical Company. |
| AO | The antioxidant pentaerythritol tetrakis(3,5-di-*tert*-butyl-4-hydroxyhydrocinnamate), CAS Reg. No. 6683-19-8; obtained as IRGANOX™ 1010 from BASF. |
| Quencher | Monozinc phosphate (ZnH₂PO₄), CAS Reg. No. 13598-37-3; obtained as Z21-82 from Budenheim Iberica. |
| UVA | The ultraviolet light absorber 2-(2'-hydroxy-5-t-octylphenyl)-benzotriazole, CAS Reg. No. 3147-75-9; obtained as CYASORB™ UV 5411 from Cytec. |
| CB | Carbon black, CAS Reg. No. 1333-86-4; obtained as MONARCH™ 800 from Cabot. |
| S. Green 3 | Solvent Green 3, CAS Reg. No. 128-80-3; obtained as MACROLEX™ Green 5B from Lanxess. |
| S. Red. 135 | Solvent Red 135, CAS Reg. No. 20749-68-2; obtained as MACROLEX™ Red EG from Lanxess. |

Each composition was prepared by dry-blending all components, then adding the dry-blended mixture to the feed throat of a twin-screw extruder having a screw diameter of 37 millimeters, a screw length of 1.5 meters, a screw rotation rate of 300 rotations per minute, a throughput of 60 kilograms per hour, 45% torque, and zone temperatures of 50 °C / 100 °C / 200 °C / 260 °C / 2700 °C / 255 °C / 255 °C / 260 °C / 270 °C / 260 °C / 230 °C from feed throat to die.

The extrudate was pelletized, and the pellets dried for four hours at 120 °C. Parts for property testing were molded in accordance with the respective ASTM standards in an injection molding machine operating at a hopper temperature of 70 °C, barrel temperatures of 240 °C / 250 °C / 250 °C / 250 °C, a mold temperature of 80 °C, a screw speed of 100 rotations per minute, and a back pressure of 30 kilogram-force per centimeter².

Melt flow rate values, expressed in grams per 10 minutes, were determined according to ASTM D1238-13 at 265 °C and 5 kilogram load. Unnotched Izod impact strength values, expressed in joules/meter, were determined according to ASTM D4812-11 at 23 °C on samples having dimensions 63.5 millimeters × 12.7 millimeters × 3.2 millimeters. Notched Izod impact strength values, expressed in joules/meter, were determined according to ASTM D256-10 at 23 °C on samples having dimensions 63.5 millimeters × 12.7 millimeters × 3.2 millimeters. Tensile stress values at break, expressed in units of megapascals, were determined according to ASTM D638-10 at 23 °C using a tensile bar having a thickness of 3.2 millimeters, and a test speed of 50 millimeters per minute. Heat deflection temperature values, expressed in °C, were determined according to ASTM D648-07 using bar cross-section dimensions of 3.2 millimeters × 12.5 millimeters, an edgewise test direction, a support span of 100 millimeters (Method B), a loading fiber stress of 1.82 megapascals, a heating rate of 2.0 °C per minute, and a deflection at reading of 0.25 millimeter.

Flame retardancy of injection molded flame bars was determined according to Underwriter's Laboratory Bulletin 94 "Tests for Flammability of Plastic Materials, UL 94", 20 mm Vertical Burning Flame Test. Before testing, flame bars with a thickness of 0.6 millimeters were conditioned at 23°C and 50% relative humidity for at least 48 hours. In the UL 94 20 mm Vertical Burning Flame Test, a set of five flame bars was tested. For each bar, a flame was applied to the bar then removed, and the time required for the bar to self-extinguish (first afterflame time, t1) was noted. The flame was then reapplied and removed, and the time required for the bar to self-extinguish (second afterflame time, t2) and the post-flame glowing time (afterglow time, t3) were noted. To achieve a rating of V-0, the afterflame times t1 and t2 for each individual specimen must have been less than or equal to 10 seconds; and the total afterflame time for all five specimens (t1 plus t2 for all five specimens) must have been less than or equal to 50 seconds; and the second afterflame time plus the afterglow time for each individual specimen (t2 + t3) must have been less than or equal to 30 seconds; and no specimen can have flamed or glowed up to the holding clamp; and the cotton indicator cannot have been ignited by flaming particles or drops. To achieve a rating of V-1, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; and the cotton indicator cannot have been ignited by flaming particles or drops. To achieve a rating of V-2, the afterflame times t1 and t2 for each individual specimen must have been less than or equal to 30 seconds; and the total afterflame time for all five specimens (t1 plus t2 for all five specimens) must have been less than or equal to 250 seconds; and the second afterflame time plus the afterglow time for each individual specimen (t2 + t3) must have been less than or equal to 60 seconds; and no specimen can have flamed or glowed up to the holding clamp; but the cotton indicator can have been ignited by flaming particles or drops. Compositions not achieving a rating of V-2 were considered to have failed.

CIE1976 LAB color data and reflection curves were acquired on an X-Rite ColorEye 7000A with D65 illumination, 10° observer, UV included, and reflection mode. SCI and SCE modes were used to include and exclude, respectively, specular reflected light and give results that were respectively dependent on and independent of surface gloss.

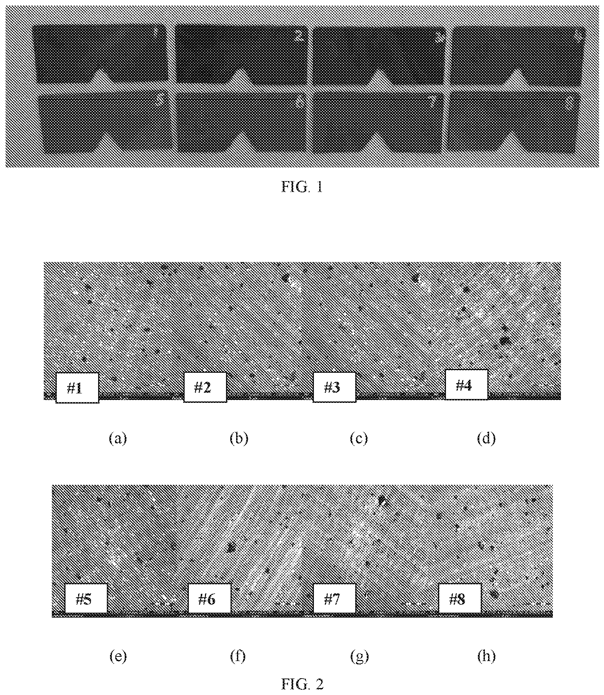

Table 2 summarizes compositions and properties for examples varying in polycarbonate content, poly(butyl acrylate-co-methyl methacrylate) content, block polyestercarbonate type and amount, and colorant type and amount. In Table 2, component amounts are expressed in weight percent based on the total weight of the composition. Comparative Examples 1 and 2, and Examples 1 and 2 all contain carbon black as black colorant. Relative to Comparative Example 1 (with impact modifier but no block polyestercarbonate), Comparative Example 2 (without impact modifier or block polyestercarbonate) and Example 1 (without impact modifier and with block polyestercarbonate) exhibited desirably lower values of L* in both SCI and SCE modes. The deeper black of Comparative Example 2 and Example 1 was also evident from visual inspection, as shown in Figure 1, where sample numbers 1-8 correspond, respectively, to Comparative Examples 1 and 2, Examples 1 and 2, Comparative Examples 3 and 4, and Examples 3 and 4. Example 2 is representative of a composition useful for applications requiring high ductility. It exhibits higher notched Izod impact strength and tensile stress than Comparative Example 1, while also exhibiting desirably lower L* values in both SCI and SCE modes. Similar trends are observed for Comparative Examples 3 and 4, and Examples 3 and 4, all containing a dye combination as the black colorant.

Higher L* values in SCE mode can be explained by the contribution of surface reflection to SCE L*. Surface reflection is determined by the distribution of polymer blocks and internal scattering. While not wishing to be bound by any particular theory of operation, Applicants believe that the SEM images in Figure 2 are consistent with the block polyestercarbonate acting as a compatibilizer for polycarbonate and poly(butylene terephthalate), which minimizes the internal scattering of the base resin. As a result, the block polyestercarbonate-containing compositions exhibited surfaces with better color manifested as a lower SCE mode L* value for Example 1 versus Comparative Example 1. There is no evidence in either the SCE data or the SEM images for a large difference in internal scattering between Comparative Example 2 and Example 1. All samples exhibited that same unnotched Izod value of 2150 joules/meter because none of the samples broke. Although Comparative Example 2 exhibited a low L* value in SCE mode, it also exhibited a low notched Izod impact strength value.

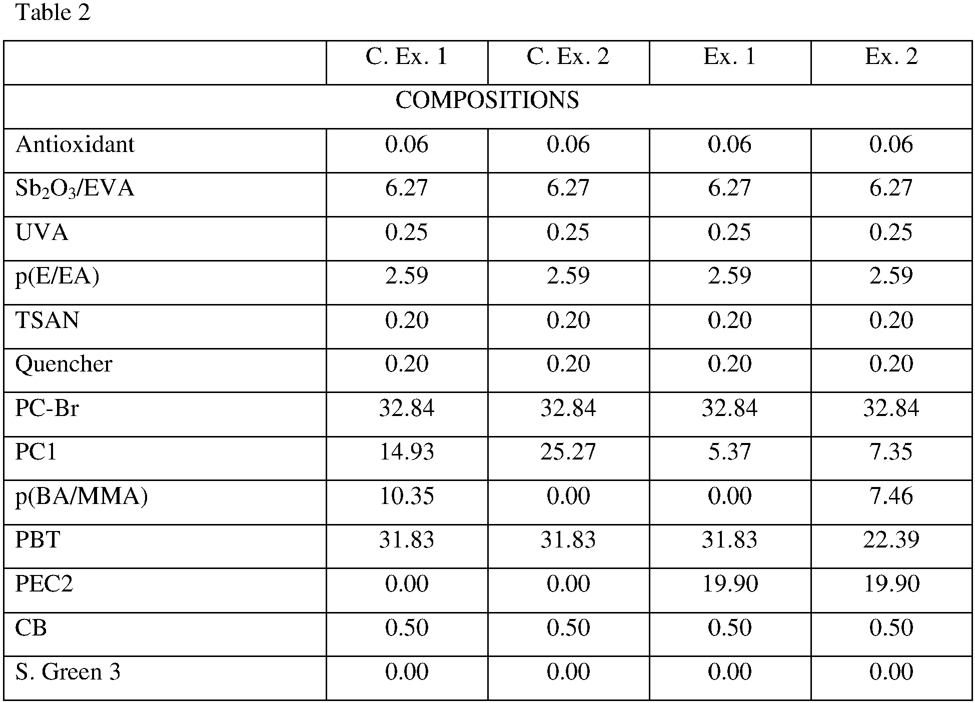

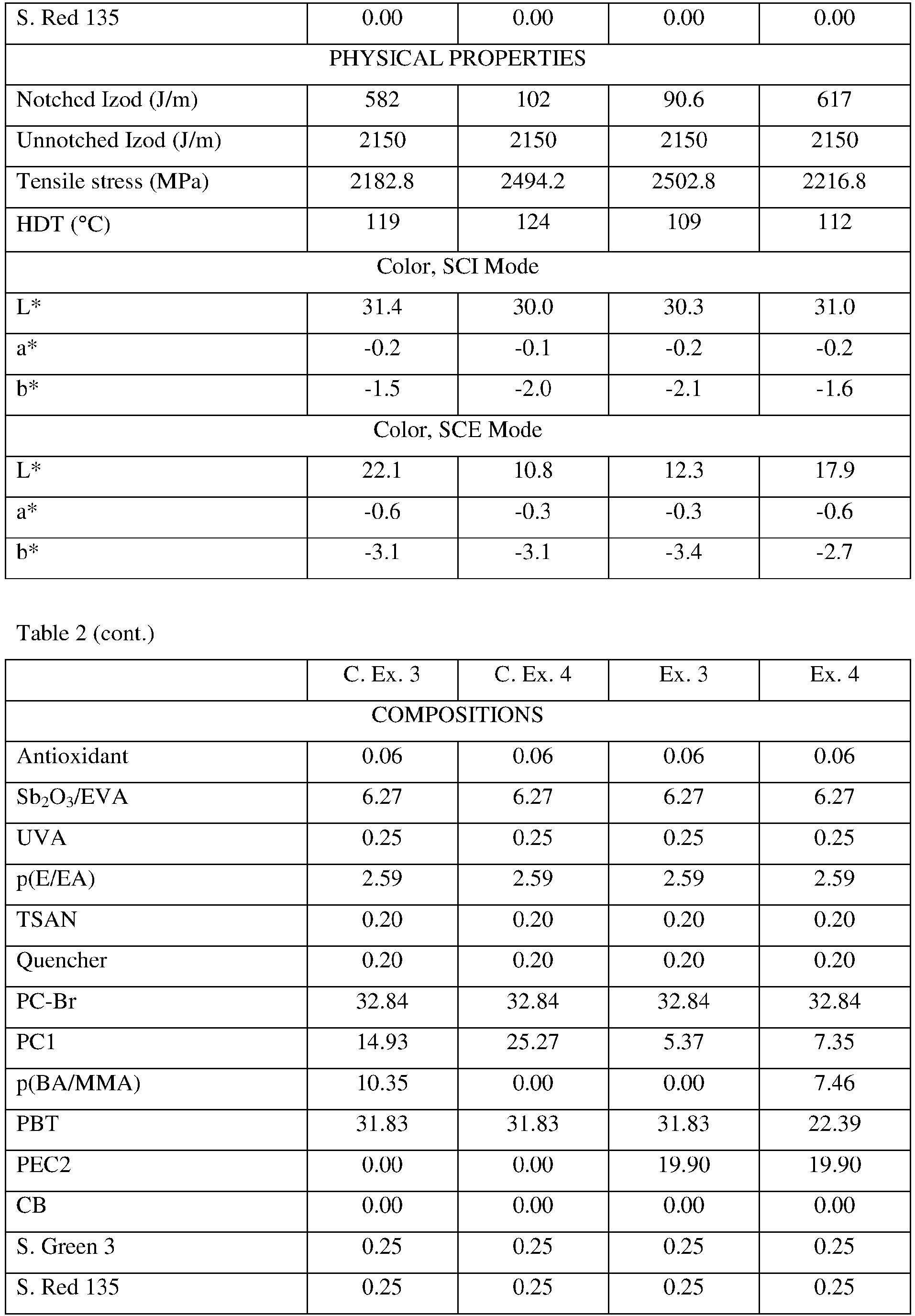

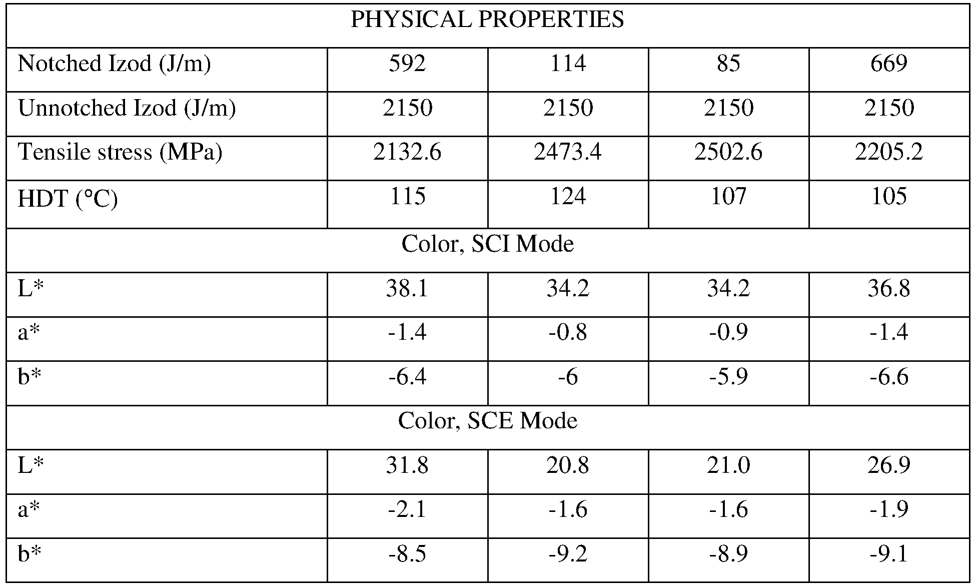

In order to further study the compatibilizing effect of polyestercarbonate in a polycarbonate/poly(butylene terephthalate) matrix, another set of examples was prepared with varying ratios of polycarbonate, poly(butylene terephthalate), and polyestercarbonate. Two different polyestercarbonates were employed, PEC1 with about 81 mole percent resorcinol ester linkages, about 8 mole % resorcinol carbonate linkages, and about 11 mole % bisphenol A carbonate linkages, and PEC2 with about 19 mole percent resorcinol ester linkages, about 6 mole % resorcinol carbonate linkages, and about 75 mole % bisphenol A carbonate linkages. Polyestercarbonate content was maintained at 30.64 weight percent in all examples. Comparative Example 5 was a control example lacking polyestercarbonate. Examples 5-9 represent variations in the ratio of poly(butylene terephthalate) to polyestercarbonate from 1:3 to 1:1. Examples 11 and 12 provide a balance of desired color and improved ductility. Examples 10 and 16 utilize PEC1 rather than PEC2.

Among the carbon black-containing samples, Examples 5-12 containing polyester carbonate exhibited desirably lower L* values in SCI and SCE modes relative to Comparative Example 5 without polyestercarbonate. All the samples without impact modifier (Examples 5-10, 14, and 16) have lower L* values than the samples with impact modifier (Comparative Example 1, Examples 11-13 and 15). L* values for Examples 5-9 suggest that L* undesirably increases slightly as the ratio of poly(butylene terephthalate) to polyestercarbonate increases from 1:3 to 1:1.

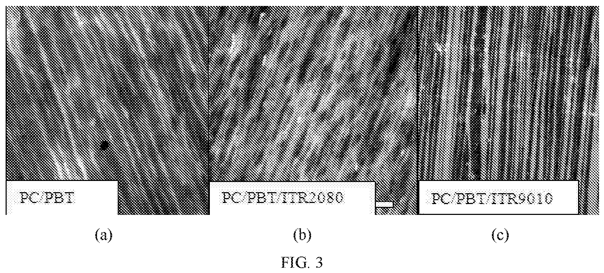

A comparison of Examples 7 and 10 indicates that the polyestercarbonate PEC1, with a relatively high content of polyester linkages, is not as effective a compatibilizer as PEC2 with a lower content of polyester linkages. This is also apparent in the SEM images of Figure 3, where "ITR2080" in Figure 3(b) refers to PEC2, and "ITR9010" in Figure 3(c) refers to PEC1. Example 7, with PEC2, also exhibits better ductility than Example 10, with PEC1.

All samples exhibited excellent flame retardancy, manifested as a UL 94 V-0 rating at a thickness of 0.6 millimeters.

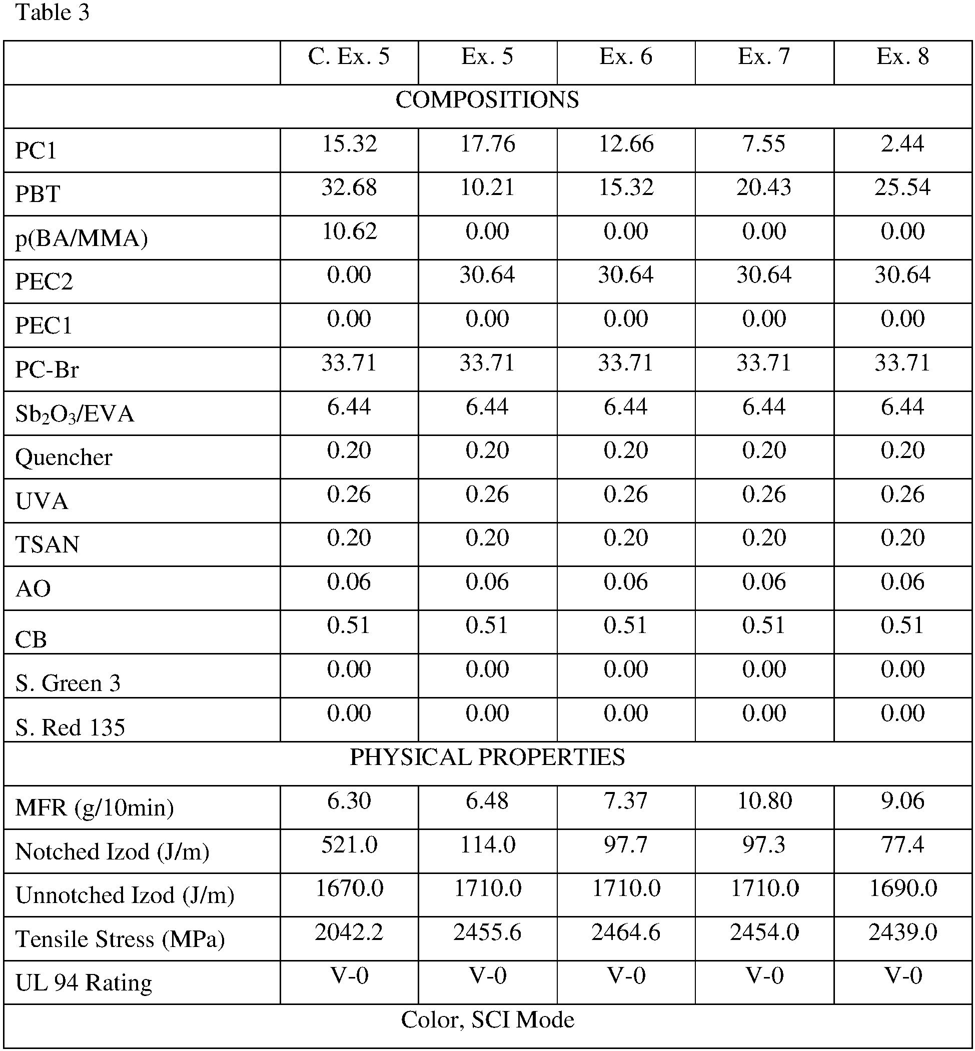

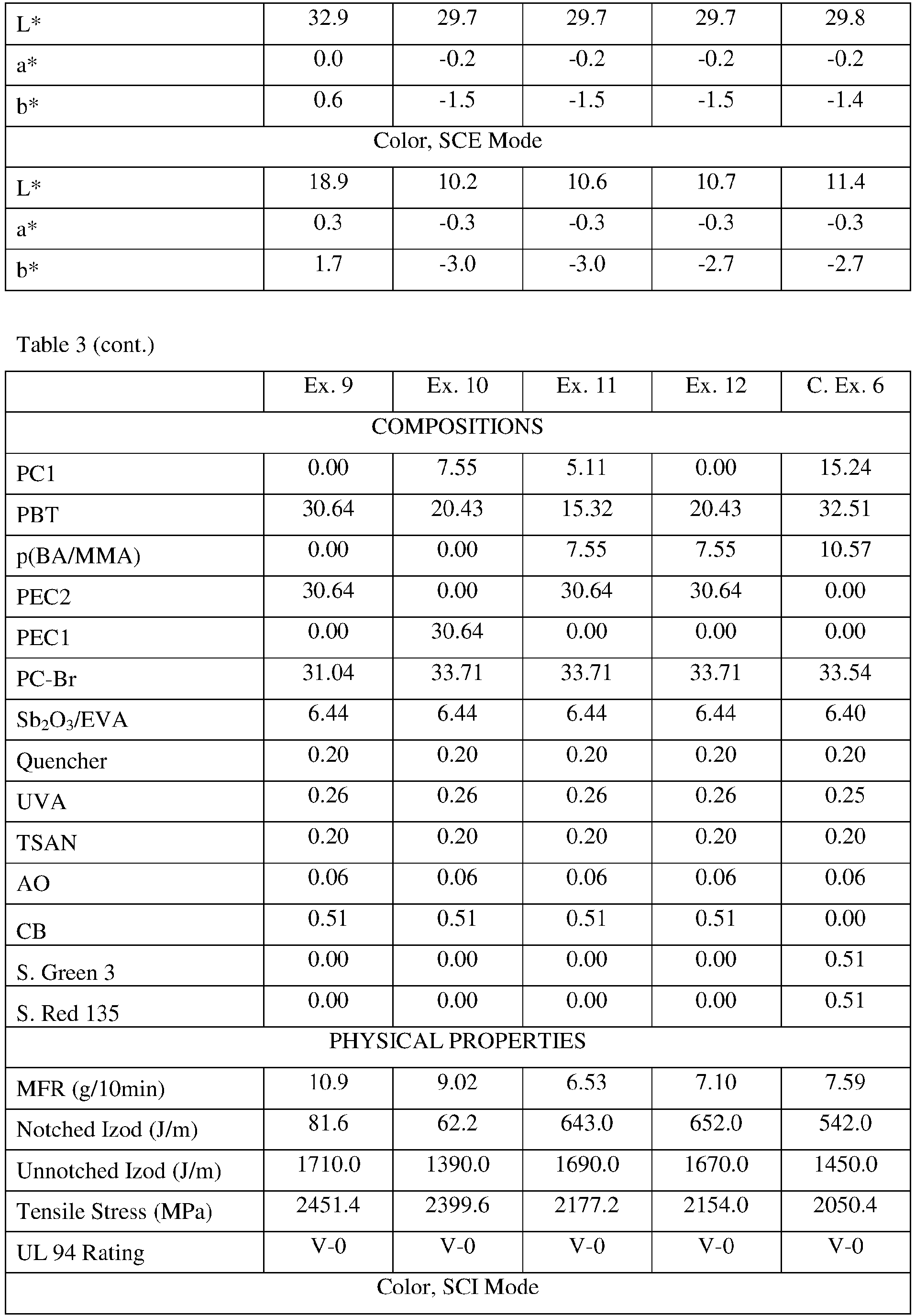

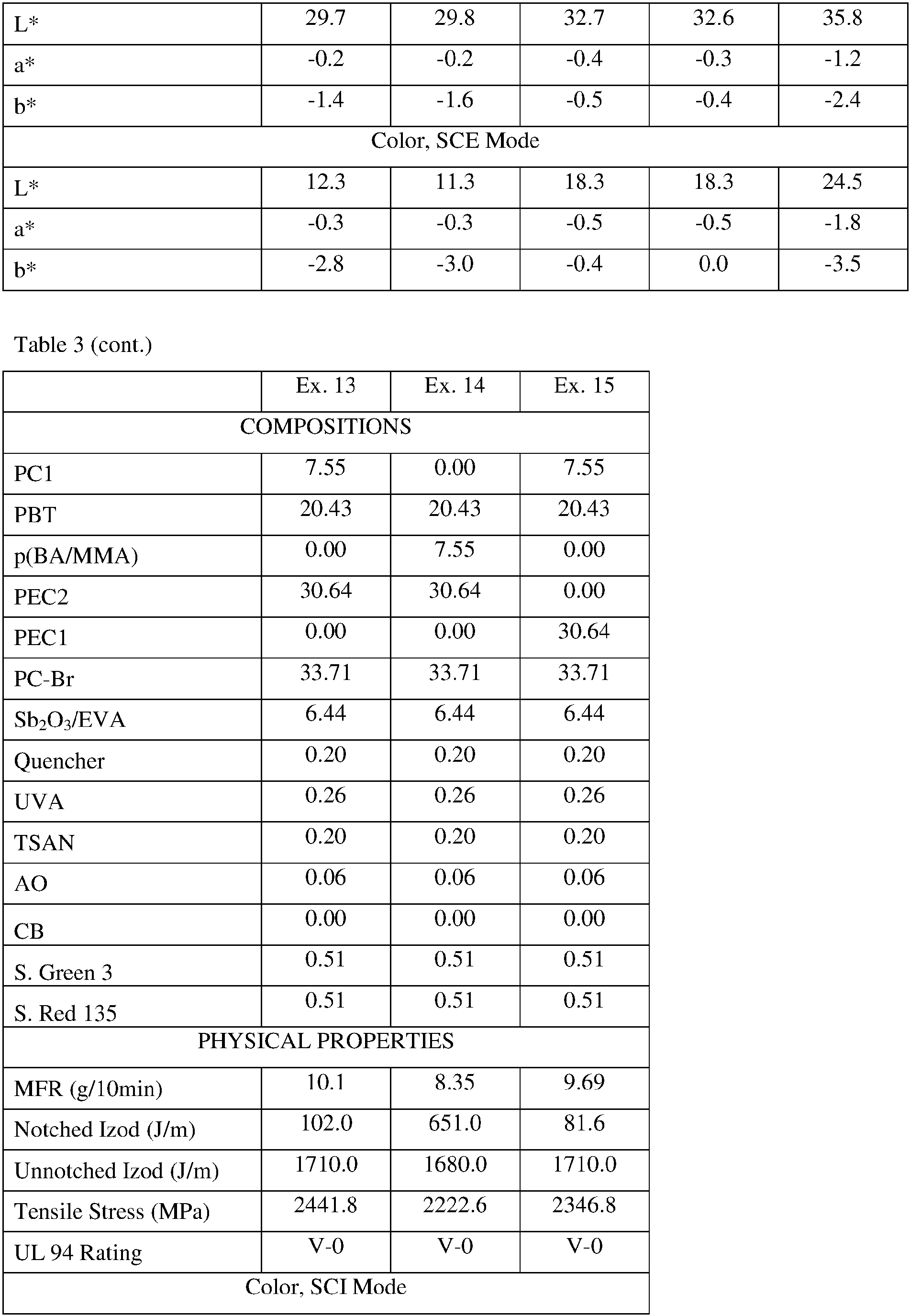

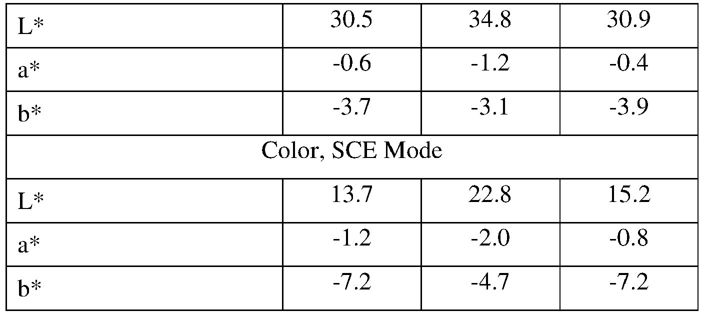

## Claims

1. A composition comprising, based on the total weight of the composition:
20 to 50 weight percent of a brominated polycarbonate;
10 to 50 weight percent of poly(butylene terephthalate);
10 to 40 weight percent of a block polyestercarbonate comprising
a polyester block comprising resorcinol ester repeat units having the structure 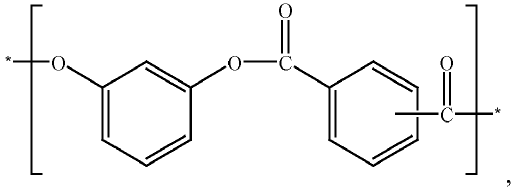 and
a polycarbonate block comprising carbonate repeat units having the structure 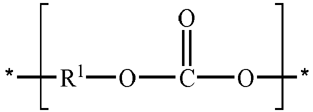
wherein at least 60 percent of the total number of R¹ groups are aromatic
wherein the block polyestercarbonate comprises 10 to 40 weight percent of the
polyester block and 60 to 90 weight percent of the polycarbonate block;
2 to 10 weight percent of diantimony trioxide; and
0.2 to 5 weight percent of a black colorant.

2. The composition of claim 1, wherein the black colorant comprises carbon black, at least two dyes, or a combination thereof.

3. The composition of claim 1, wherein the black colorant comprises at least two organic dyes.

4. The composition of claim 1, further comprising 4 to 14 weight percent of an impact modifier selected from the group consisting of poly(butyl acrylate-co-methyl methacrylate), poly(acrylonitrile-co-butadiene-co-styrene), poly(methyl methacrylate-co-butadiene-co-styrene), poly(acrylonitrile-co-styrene-co-acrylate), polyolefin elastomer, polycarbonate-polysiloxane block copolymer, and combinations thereof.

5. The composition of claim 1, further comprising 4 to 14 weight percent of an impact modifier comprising poly(butyl acrylate-co-methyl methacrylate).

6. The composition of claim 1, further comprising 5 to 20 weight percent of an unbrominated polycarbonate.

7. The composition of claim 1,
wherein the polyester block comprises resorcinol ester repeat units having the structures 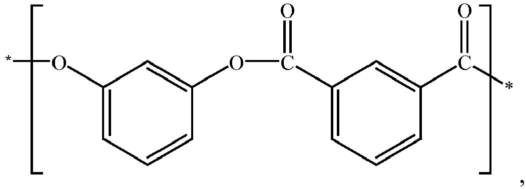 and 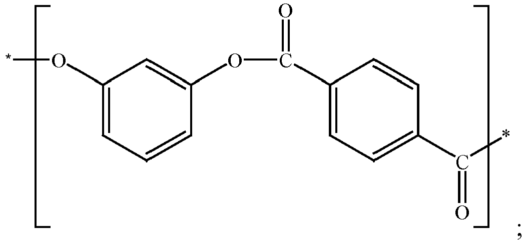 wherein the polycarbonate block comprises carbonate repeat units having the structure 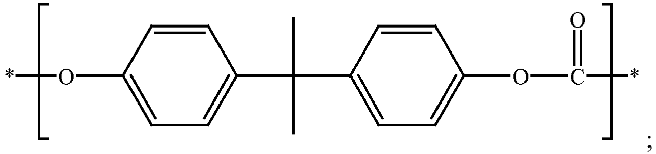 wherein the block polyestercarbonate comprises 10 to 40 weight percent of the polyester block and 60 to 90 weight percent of the polycarbonate block;
wherein the brominated polycarbonate comprises repeat units having the structures 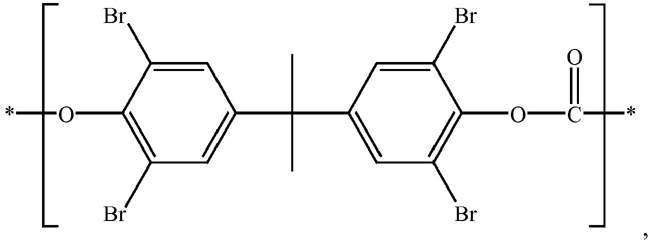 and 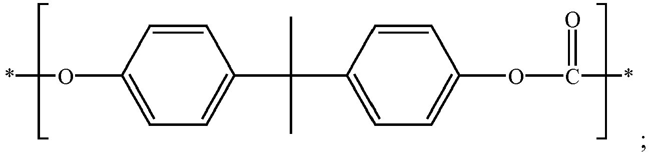
wherein the black colorant comprises carbon black;
wherein the composition comprises
28 to 38 weight percent of the brominated polycarbonate,
10 to 25 weight percent of the poly(butylene terephthalate),
25 to 35 weight percent of the block polyestercarbonate,
4 to 8 weight percent of the diantimony trioxide, and
0.4 to 2 weight percent of the black colorant; and
wherein the composition further comprises 5 to 11 weight percent of a poly(butyl acrylate-co-methyl methacrylate).

8. An article comprising a composition comprising, based on the total weight of the composition:
28 to 38 weight percent of a brominated polycarbonate;
10 to 25 weight percent of poly(butylene terephthalate);
25 to 35 weight percent of a block polyestercarbonate comprising
a polyester block comprising resorcinol ester repeat units having the structure 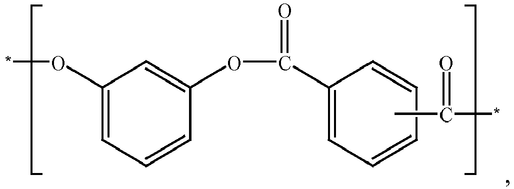 and
a polycarbonate block comprising carbonate repeat units having the structure 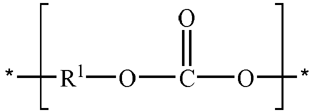
wherein at least 60 percent of the total number of R¹ groups are aromatic;
wherein the polyester block comprises resorcinol ester repeat units having the structures 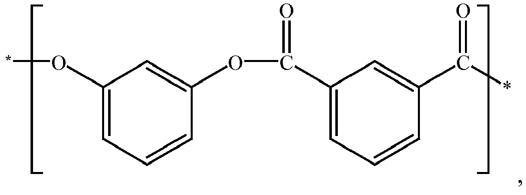 and 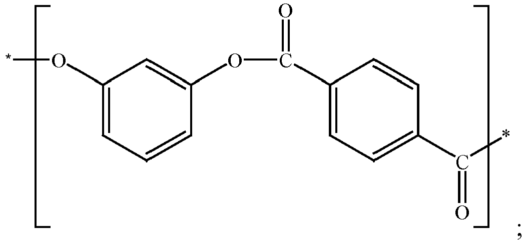
wherein the polycarbonate block comprises carbonate repeat units having the structure 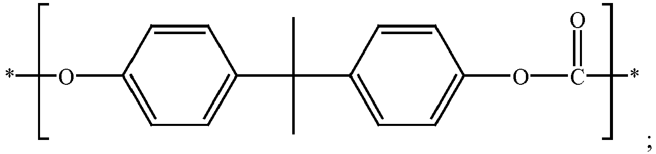
wherein the block polyestercarbonate comprises 10 to 40 weight percent of the polyester block and 60 to 90 weight percent of the polycarbonate block;
wherein the brominated polycarbonate comprises repeat units having the structures 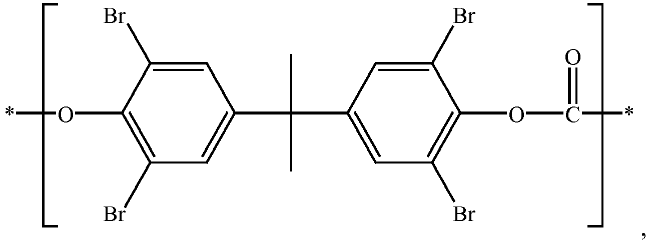 and 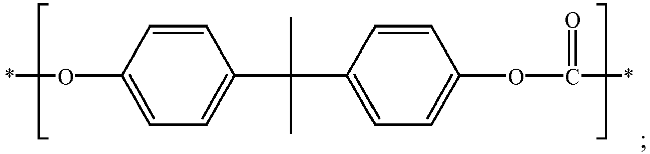
4 to 8 weight percent of diantimony trioxide; and
0.4 to 2 weight percent of a black colorant.
wherein the composition further comprises 5 to 11 weight percent of a poly(butyl acrylate-co-methyl methacrylate).

9. The article of claim 8, wherein the article is a flat screen television bezel, a cell phone back, or an exterior part of a household appliance.

## Patentansprüche

1. Zusammensetzung, umfassend, basierend auf dem Gesamtgewicht der Zusammensetzung:
20 bis 50 Gew.-% eines bromierten Polycarbonats;
10 bis 50 Gew.-% eines Poly(butylenterephthalats);
10 bis 40 Gew.-% eines Block-Polyestercarbonats, umfassend einen Polyesterblock, umfassend Resrocinester-Wiederholeinheiten, die folgende Struktur aufweisen 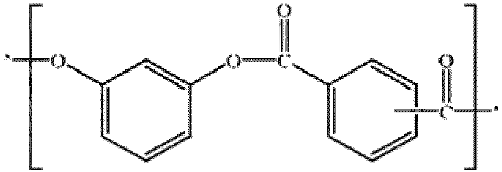 und
einen Polycarbonatblock, umfassend Carbonat-Wiederholeinheiten, die folgende Struktur aufweisen 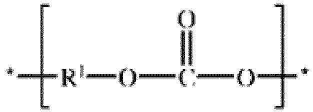 wobei mindestens 60 Prozent der gesamten Anzahl an R¹-Gruppen aromatisch sind, wobei das BlockPolyestercarbonat 10 bis 40 Gew.-% des Polyesterblocks und 60 bis 90 Gew.-% des Polycarbonatblocks umfasst;
2 bis 10 Gew.-% Diantimontrioxid; und
0,2 bis 5 Gew.-% eines schwarzen Farbstoffs.

2. Zusammensetzung nach Anspruch 1, wobei der schwarze Farbstoff Ruß, mindestens zwei Färbemittel oder eine Kombination davon umfasst.

3. Zusammensetzung nach Anspruch 1, wobei der schwarze Farbstoff mindestens zwei organische Färbemittel umfasst.

4. Zusammensetzung nach Anspruch 1, ferner umfassend 4 bis 14 Gew.-% eines Schlagzähmodifikators, ausgewählt aus der Gruppe bestehend aus Poly(butylacrylat-co-methylmethacrylat), Poly(acrylonitril-co-butadien-co-styrol), Poly(methylmethacrylat-co-butadien-co-styrol), Poly(acrylnitril-co-styrol-co-acrylat), Polyolefinelastomer, Polycarbonat-polysiloxan-Blockcopolymer und Kombinationen davon.

5. Zusammensetzung nach Anspruch 1, ferner umfassend 4 bis 14 Gew.-% eines Schlagzähmodifikators, umfassend Poly(butylacrylat-co-methylmethacrylat).

6. Zusammensetzung nach Anspruch 1, ferner umfassend 5 bis 20 Gew.-% eines nicht bromierten Polycarbonats.

7. Zusammensetzung nach Anspruch 1,
wobei der Polyesterblock Resorcinester-Wiederholeinheiten mit folgenden Strukturen umfasst 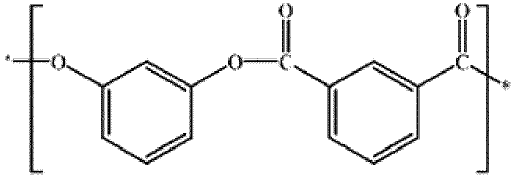 und 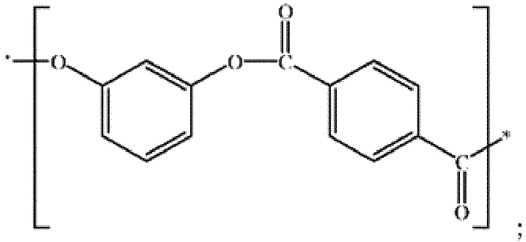 wobei der Polycarbonatblock Carbonat-Wiederholeinheiten umfasst, die folgende Struktur aufweisen 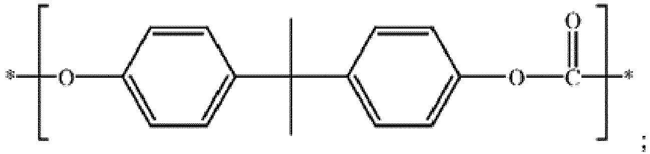 wobei das Blockpolyestercarbonat 10 bis 40 Gew.-% des Polyesterblocks und 60 bis 90 Gew.-% des Polycarbonatblocks umfasst;
wobei das bromierte Polycarbonat Wiederholeinheiten mit folgenden Strukturen umfasst 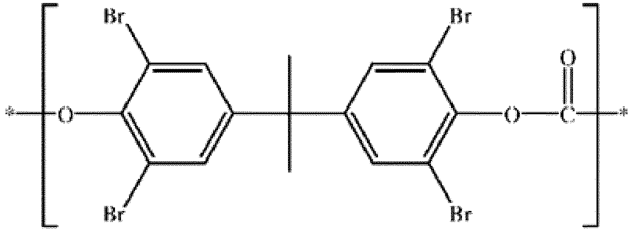 und 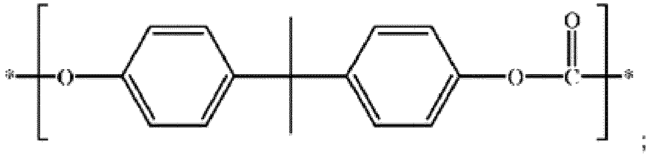 wobei der schwarze Farbstoff Ruß umfasst;
wobei die Zusammensetzung
28 bis 38 Gew.-% des bromierten Polycarbonats,
10 bis 25 Gew.-% des Poly(butylenterephthalats),
25 bis 35 Gew.-% des Block-Polyestercarbonats,
4 bis 8 Gew.-% des Diantimontrioxids, und
0,4 bis 2 Gew.-% des schwarzen Farbstoffs umfasst; und
wobei die Zusammensetzung ferner 5 bis 11 Gew.-% eines Poly(butylacrylat-co-methylmethacrylats) umfasst.

8. Gegenstand, umfassend eine Zusammensetzung, umfassend, basierend auf dem Gesamtgewicht der Zusammensetzung:
28 bis 38 Gew.-% eines bromierten Polycarbonats;
10 bis 25 Gew.-% eines Poly(butylenterephthalats);
25 bis 35 Gew.-% eines Block-Polyestercarbonats, umfassend einen Polyesterblock, umfassen Resorcinester-Wiederholeinheiten, die folgende Struktur aufweisen 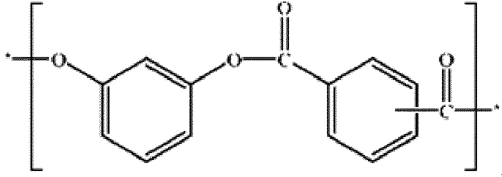 und
einen Polycarbonatblock, umfassend Carbonat-Wiederholeinheiten, die folgende Struktur aufweisen 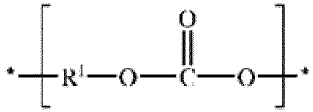 wobei mindestens 60 Prozent der gesamten Anzahl an R¹-Gruppen aromatisch sind;
wobei der Polyesterblock Resorcinester-Wiederholeinheiten umfasst, die folgende Strukturen aufweisen 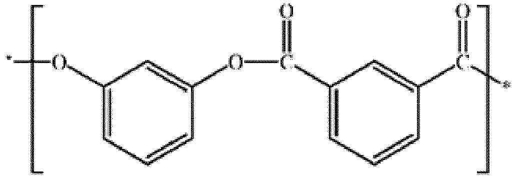 und 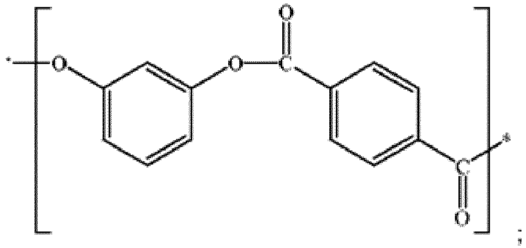
wobei der Polycarbonatblock Carbonat-Wiederholeinheiten umfasst, die folgende Struktur aufweisen 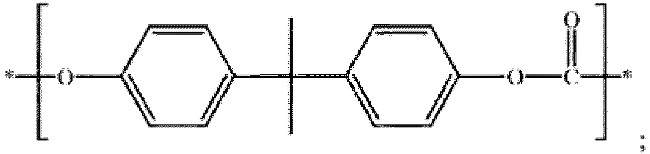 wobei das Blockpolyestercarbonat 10 bis 40 Gew.-% des Polyesterblocks und 60 bis 90 Gew.-% des Polycarbonatblocks umfasst;
wobei das bromierte Polycarbonat Wiederholeinheiten mit folgenden Strukturen umfasst 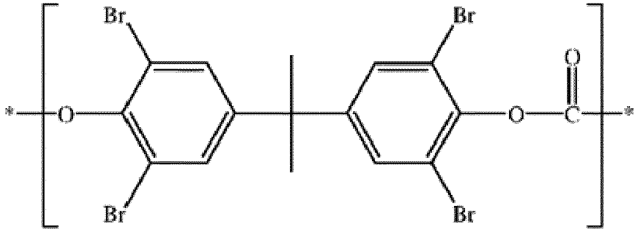 und 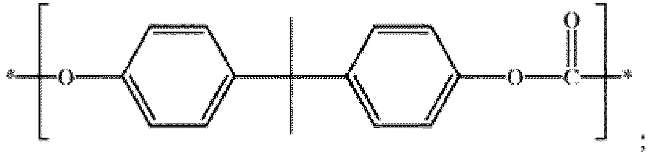
4 bis 8 Gew.-% Diantimontrioxid; und
0,4 bis 2 Gew.-% schwarzen Farbstoffs; und
wobei die Zusammensetzung ferner 5 bis 11 Gew.-% eines Poly(butylacrylat-co-methylmethacrylats) umfasst.

9. Gegenstand nach Anspruch 8, wobei der Gegenstand eine Verkleidung für einen Flachbildfernseher, ein Handyrücken oder ein Außenteil eines Haushaltsgeräts ist.

## Revendications

1. Composition comprenant, sur la base du poids total de la composition :
20 à 50 pour cent en poids d'un polycarbonate bromé ;
10 à 50 pour cent en poids de poly(téréphtalate de butylène) ;
10 à 40 pour cent en poids d'un polyestercarbonate séquencé comprenant
un bloc de polyester comprenant des motifs de répétition d'ester de résorcinol ayant la structure 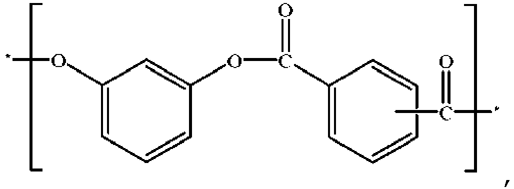 et
un bloc de polycarbonate comprenant des motifs de répétition de carbonate ayant la structure 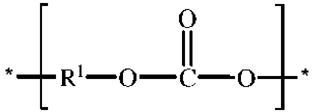
dans laquelle au moins 60 pour cent du nombre total de groupes R¹ sont aromatiques, dans laquelle le polyestercarbonate séquencé comprend 10 à 40 pour cent en poids du bloc de polyester et 60 à 90 pour cent en poids du bloc de polycarbonate ;
2 à 10 pour cent en poids de trioxyde de diantimoine ; et
0,2 à 5 pour cent en poids d'un colorant noir.

2. Composition selon la revendication 1, dans laquelle le colorant noir comprend du noir de carbone, au moins deux agents colorants, ou une combinaison de ceux-ci.

3. Composition selon la revendication 1, dans laquelle le colorant noir comprend au moins deux agents colorants organiques.

4. Composition selon la revendication 1, comprenant en outre 4 à 14 pour cent en poids d'un modificateur de résistance aux chocs choisi dans le groupe constitué de poly((acrylate de butyle)-co-(méthacrylate de méthyle)), poly(acrylonitrile-co-butadiène-co-styrène), poly((méthacrylate de méthyle)-co-butadiène-co-styrène), poly(acrylonitrile-co-styrène-co-acrylate), un élastomère de polyoléfine, un copolymère séquencé polycarbonate-polysiloxane, et des combinaisons de ceux-ci.

5. Composition selon la revendication 1, comprenant en outre 4 à 14 pour cent en poids d'un modificateur de résistance aux chocs comprenant du poly((acrylate de butyle)-co-(méthacrylate de méthyle).

6. Composition selon la revendication 1, comprenant en outre 5 à 20 pour cent en poids d'un polycarbonate non bromé.

7. Composition selon la revendication 1,
dans laquelle le bloc de polyester comprend des motifs de répétition d'ester de résorcinol ayant les structures 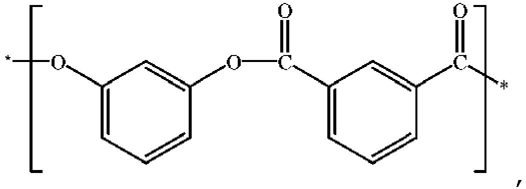 et 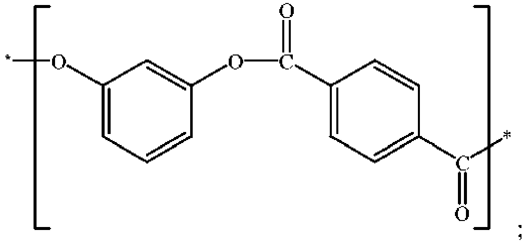 dans lesquelles le bloc de polycarbonate comprend des motifs de répétition de carbonate ayant la structure 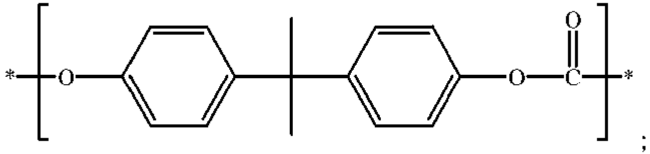 dans laquelle le polyestercarbonate séquencé comprend 10 à 40 pour cent en poids du bloc de polyester et 60 à 90 pour cent en poids du bloc de polycarbonate ; dans laquelle le polycarbonate bromé comprend des motifs de répétition ayant les structures 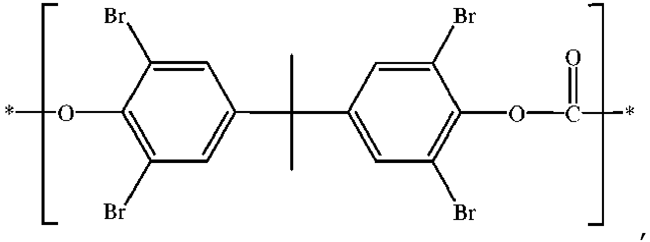 et 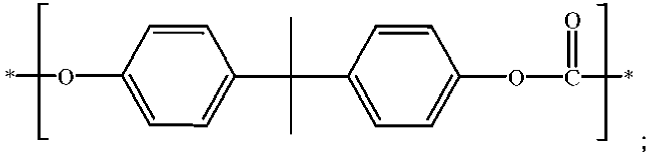 dans laquelle le colorant noir comprend du noir de carbone ;
la composition comprenant
28 à 38 pour cent en poids du polycarbonate bromé,
10 à 25 pour cent en poids du poly(téréphtalate de butylène),
25 à 35 pour cent en poids du polyestercarbonate séquencé,
4 à 8 pour cent en poids du trioxyde de diantimoine, et 0,4 à 2 pour cent en poids du colorant noir ; et
la composition comprenant en outre 5 à 11 pour cent en poids d'un poly((acrylate de butyle)-co-(méthacrylate de méthyle).

8. Article comprenant une composition comprenant, sur la base du poids total de la composition :
28 à 38 pour cent en poids d'un polycarbonate bromé ;
10 à 25 pour cent en poids de poly(téréphtalate de butylène) ;
25 à 35 pour cent en poids d'un polyestercarbonate séquencé comprenant
un bloc de polyester comprenant des motifs de répétition d'ester de résorcinol ayant la structure 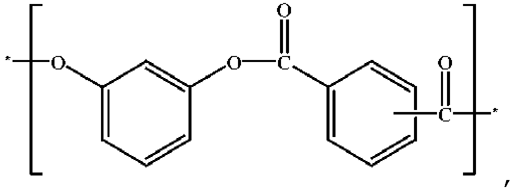 et
un bloc de polycarbonate comprenant des motifs de répétition de carbonate ayant la structure 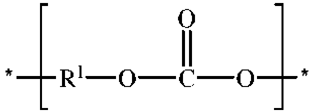 dans laquelle au moins 60 pour cent du nombre total de groupes R¹ sont aromatiques ; dans laquelle le bloc de polyester comprend des motifs de répétition d'ester de résorcinol ayant les structures 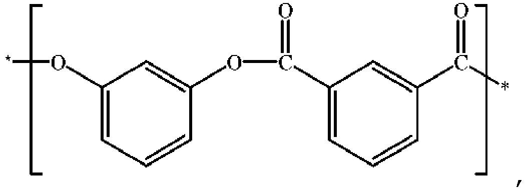 et 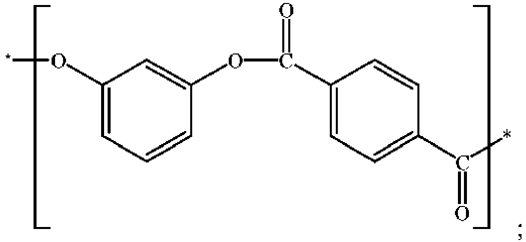
dans laquelle le bloc de polycarbonate comprend des motifs de répétition de carbonate ayant la structure 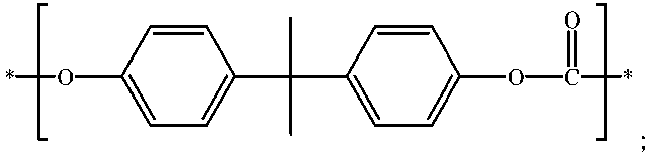
dans laquelle le polyestercarbonate séquencé comprend 10 à 40 pour cent en poids du bloc de polyester et 60 à 90 pour cent en poids du bloc de polycarbonate ;
dans laquelle le polycarbonate bromé comprend des motifs de répétition ayant les structures 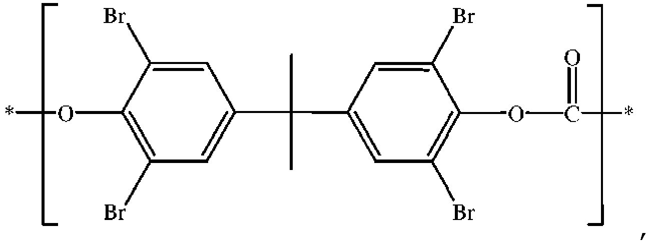 et 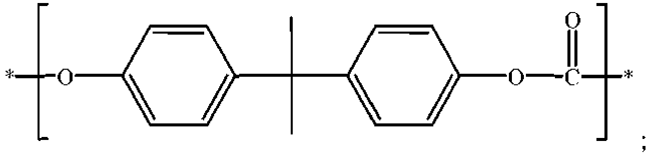
4 à 8 pour cent en poids de trioxyde de diantimoine ; et 0,4 à 2 pour cent en poids d'un colorant noir ; et
la composition comprenant en outre 5 à 11 pour cent en poids d'un poly((acrylate de butyle)-co-(méthacrylate de méthyle).

9. Article selon la revendication 8, dans lequel l'article est un panneau avant de téléviseur à écran plat, un panneau arrière de téléphone cellulaire, ou une partie extérieure d'un appareil ménager.
